(19) Europäisches Patentamt
European Patent Office
Office européen des brevets

(11) EP 1 917 293 B1

(12) **EUROPEAN PATENT SPECIFICATION**

(45) Date of publication and mention of the grant of the patent:
**05.11.2008 Bulletin 2008/45**

(21) Application number: **06765223.0**

(22) Date of filing: **04.08.2006**

(51) Int Cl.:
***C08G 79/04*** *(2006.01)*

(86) International application number:
**PCT/GB2006/002920**

(87) International publication number:
**WO 2007/017647 (15.02.2007 Gazette 2007/07)**

(54) **IMPROVED AMINOPHOSPHINATE CO-POLYMER**

VERBESSERTES AMINOPHOSPHINATCOPOLYMER

COPOLYMÈRE D'AMINOPHOSPHINATE AMÉLIORÉ

(84) Designated Contracting States:
**AT BE BG CH CY CZ DE DK EE ES FI FR GB GR HU IE IS IT LI LT LU LV MC NL PL PT RO SE SI SK TR**

(30) Priority: **06.08.2005 GB 0516199**
**06.10.2005 GB 0520310**
**18.11.2005 US 738277 P**

(43) Date of publication of application:
**07.05.2008 Bulletin 2008/19**

(73) Proprietor: **Rhodia, Inc.**
**Cranbury, NJ 08512 (US)**

(72) Inventors:
- **WOODWARD, Gary**
**Ewing, NJ 08618 (US)**
- **OTTER, Graham**
**Bristol, PA 19007 (US)**
- **ZAFAR, Shazia**
**Birmingham B16 8SN (GB)**
- **BENDEJACQ, Denis**
**F-75005 PARIS (FR)**
- **ANTHONY, Olivier**
**F-95630 MERIEL (FR)**

(74) Representative: **Seugnet, Jean Louis**
**RHODIA SERVICES**
**Direction de la Propriété Industrielle**
**40, rue de la Haie-Coq**
**93306 Aubervilliers Cedex (FR)**

(56) References cited:
**EP-A2- 0 419 264**
**EP-B1- 1 254 144**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to co-polymers (also known as A-B-A type block polymers), methods of making these polymers and their applications.

Accordingly, in a first aspect, the present invention provides a co-polymer or oligomer thereof, of the formula:

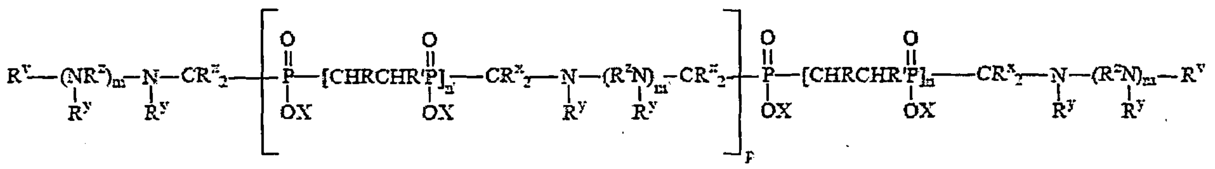

wherein:

- R and R' are each independently selected from hydrogen, a hydroxyl group, a carboxyl group, an alkyl, aryl or alkaryl group or a hydroxy - or carboxy - substituted alkyl, aryl or alkaryl group, provided that R and R' together have a total of less than 23 carbon atoms;
- X is hydrogen or a cation or an alkyl group;
- n ans n', identical or different, are greater than or equal to 0;
- each of $R^y$ groups, which may be the same or different, and each of the $R^x$ groups, which may be the same or different, is hydrogen, an optionally substituted alkyl, cycloalkyl, alkenyl, aryl, aralkyl, alkaryl or alkoxyalkyl group of 1-20 carbon atoms each of which may be optionally substituted once or more than once;
- $R^z$ is an alkane group or a substituted alkane group or a heterocyclic group;
- m and m', identical or different, are zero or from 1 to 100; p is zero or from 1 to 100; and
- each of the $R^v$ groups, which may be the same or different, is hydrogen, an optionally substituted alkyl, cycloalkyl, alkenyl, aryl, aralkyl, alkaryl or alkoxyalkyl group of 1-20 carbon atoms each of which may be optionally substituted once or more than once.

It is preferred that p and n not be simultaneously 0. It preferred than one be zero, the other be different from 0.

In a first embodiment of the co-polymer or oligomer thereof, p is zero, n is different from 0. In this first embodiment m, identical or different, can be 0 or different from 0, for example from 1 to 10.

In a second embodiment of the co-polymer or oligomer thereof, n is zero and p is different from 0. In this second embodiment n' is preferably different from 0, and m' can be 0 or different from 0. m' is however preferably 0. In this first embodiment m, identical or different, can be 0 or different from 0, for example from 1 to 10.In the co-polymer or oligomer thereof m is preferably 1 to 10.

For example one or more of the $R^v$ groups may be hydrogen or an alkyl group having at least 3 carbon atoms, or a hydroxy substituted alkyl group or a carboxyl substituted alkyl group.

In the co-polymers of the present invention the mid block is hydrophilic and the outer blocks of the co-polymer may be hydrophilic or hydrophobic. The outer blocks are preferably hydrophobic and this arrangement of blocks is novel and surprisingly gives rise to co-polymers having unexpectedly good performance in relation to a number of applications.

In the context of the present invention the outer blocks of the co-polymer are taken to be:

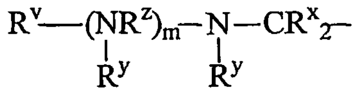

In the context of the present invention the mid block of the co-polymer is taken to be the remainder of the formula.

The outer blocks can have various properties, such as hydrophilic or hydrophobic. For hydrophilization of plastic and/or for automatic dishwashing compositions they are preferably hydrophobic. They are preferably more hydrophobic than a polyethoxy group, and preferably more hydrophobic than a polypropoxy group. For these use, m is preferably 0 and $R^v$ is preferably an alkyl group having at least 3, preferably at least 6 carbon atoms.

In the outer blocks $R^y$ is preferably hydrogen.

R is preferably a hydrogen atom. R' is preferably a substituted alkyl group, such as a $-CH_2-OH$ group.

In the block co-polymer of the present invention all functional groups resident upon $R^y$, $R^x$ or $R^z$ should not

irreversibly decompose in the presence of a carbonyl compound or hypophosphorous acid or inorganic acid.

In the context of the present invention the terms "polymer" or "polymeric" are to be interpreted as including oligomer and oligomeric.

The co-polymers of this invention may have a molecular weight of as little as 300 or as high as 100,000 or more such as 500,000.

Where X is a cation, the cations are preferably alkali metal ions, preferably sodium or alternatively potassium or lithium, but may be other monovalent, divalent or trivalent cations such as ammonium and organic substituted ammonium (including quaternary ammonium), such as triethyl- or triethanolammonium, quaternary phosphonium such as tetrakis hydroxymethyl phosphonium, alkaline earth such as calcium and magnesium or other metal ions such as aluminium.

Preferably the $R^y$ groups represent hydrogen, substituted alkyl (e.g. ethyl or methyl), aryl (e.g. phenyl or tolyl) or heterocycles (e.g. thiazole or triazole groups), and especially at least one $R^y$ group and preferably all $R^y$ groups represent groups which carry one or more functional groups capable of coordinating to metal ions, such as carbonyl, carboxyl, amino, imino, amido, phosphonic acid, hydroxyl, sulphonic acid, arsenate, inorganic and organic esters thereof, e.g. sulphate or phosphate, and salts thereof. The polymers of this invention may carry a number of different $R^y$ groups, as is the case if more than one amine is added to the reaction mixture from which the block polymer is isolated. In the mid block, when p is different from 0, $R^y$ is preferably different from hydrogen. It is for example a substituted alkyl group, such as a group of formula $-CH_2OH$, $-CH_2-CH_2OH$ $-CH_2-CH_2COOH$ or $-CH_2-COOH$.

The $R^x$ groups are preferably all hydrogen atoms. Alternatively the $R^x$ groups may inpendently be alkyl (e.g. methyl or ethyl), aryl (e.g. phenyl or tolyl), cycloalkyl, aralkyl (e.g benzyl), alkoxyalkyl (e.g. alkoxyhexyl) or these groups optionally substituted at least once or at least twice, such as substituted alkyl (e.g. haloalkyl, carboxyalkyl or phosphonoalkyl), substituted aryl (e.g. hydroxyphenyl or nitrophenyl).

In the present invention the co-polymers may have one or more $R^z$ groups being an alkane or a substituted alkane group.The $R^z$ groups may be substituted once or more than once with a carboxylic acid group, a sulphonic acid group, a phosphonic acid group, an aryl group or an amino group. Substitution also encompass presence of heteroatoms such as oxygen atoms in the alcane group. Thus $R^z$ can comprise alcoxy groups, for example in a polyalcoxyled chain, such as ethoxy and/or propopoxy groups in a polyethoxylated and/or polypropoxylated chain. These ethoxy and/or propoxy groups usually derive from an epoxide heterocyclic compounds. $R^z$ as per formula is a divalent group linked to the N atom of the $-NR^y-$ group and to the C atom of the $-CR^x_2-$ group.

Some particular examples of outer blocks of formula:

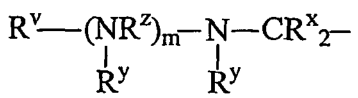

include the following groups:

- $H_2N-(-CHCH_3-CH_2-O)_q-CHCH_3-NH-CH_2-$ ($R^v$ is H, m is 1, $R^y$ is H, $R^z$ is a polypropoxy group having an average of q propoxy groups, $R^x$ is H)
- $H_2N-(CH_2)_r-NH-CH_2-$ ($R^v$ is H, m is 1, $R^y$ is H, $R^z$ is a divalent alcane group having r carbon atoms, for example from 3 to 36, preferably at least 6, $R^x$ is H)
- $H_{2s+1}C_s-$ $NH-CH_2-$ ($R^v$ is $H_{2s+1}C_s$ wherein s is a number of carbon atoms, for example from 3 to 36, preferably at least 6, m is 0, $R^y$ is H, $R^x$ is H).

The co-polymers of this invention may be optically active e.g. as in the case of examples in which at least one of the $R^y$, $R^x$ or $R^z$ groups is chiral or when the two $R^x$ groups on one or more of the carbon atoms in formula (I) are non-identical. The arrangements of the substituents around each chiral centre may be of either configuration. If desired racemic mixtures may be separated into optical isomers by means known per se.

Accordingly in a second aspect the present invention comprises a method of preparing a co-polymer of formula I, and oligomers thereof, comprising the steps of:

(a) preparing a polymer of the formula (II) or formula (II');

(II) $H-POOX[CHRCHR'POOX]_n-H$

(II') $H-[POOX[CHRCHR'POOX]_{n'}-CR^x_2-NR^y-(-R^z-R^yN)_{m'},-CR^x_2]_p-H$

where R, R', X, n, n', m', $R^x$, $R^y$, and $R^z$ have the same meaning as in the first aspect above; and

(b) subsequently

(i) adding an appropriate amine group; and
(ii) heating the reaction mixture for 15 to 180 minutes in the presence of a carbonyl compound.

The polymer of formula (II) or (II') is also referred to as an oligomer. Oligomer of formula (II) can be prepared for example according a processes described in document EP1254144. Oligomers of formula (II') can be prepared or example according a processes described in document WO 2006/032896. Oligomers of formula (II') wherein m' is 0, and $R^x$ is hydrogen, can be prepared for example by reacting an amine of formula $R^yNH_2$ with $H_3PO_2$ and HCOH under appropriate conditions for example in the presence of an acid such as HCl.

Preferably the reaction mixture is adjusted to be acidic.

Preferably the reaction mixture is heated under reflux.

Preferably the pH of the solution is adjusted to have a pH of 0.5 to 4, more preferably 0.5 to 3, most preferably 1.

The pH of the solution is preferably adjusted by the addition of an acid, for example hydrochloric acid. The acid is preferably added before the solution is heated under reflux.

The carbonyl compound is preferably added to the solution during heating under reflux. The carbonyl compound is preferably added dropwise and preferably over a period of 20 to 40 minutes, most preferably 30 minutes. The carbonyl compound is preferably an aldehyde, most preferably formaldehyde.

The solution is preferably heated under reflux for 15 to 180 minutes after addition of the carbonyl compound, more preferably 30 to 120 minutes.

The co-polymers of the present invention are useful, particularly as scale and corrosion inhibitors, in cooling water treatment, treatment of industrial process water, boiler water treatment, treatment of water in central heating and air conditioning systems, desalination plant and for treating water used or produced in oil wells including injection water, produced water, and water used for hydrostatic testing of pipelines, particularly for prevention of the deposit of calcium carbonate scale.

The co-polymers of the present invention are also useful in the hydrophilisation of surfaces such as plastics. On plastic surfaces such as surfaces of molded articles, or plastic surfaces found in automobiles for examples in bumpers, or other car body parts, or plastic surface of floors and/or furniture in private or public places, hydrophilisation can provide improved paintability, improved adhesion of paint, improved cleaning, improved next-time cleaning, faster drying, improved water sheeting and/or improved spotless drying. In a particular embodiment the copolympers are used in dishwashing compositions, preferably in automatic dishwashing compositions. In these composition the copolymers can provide to plastic-based dishware (for example Melamine, SAN, polypropylene, polyethylene or polyethylene-based copolymers such as those contained in Tupperware® products) some hydrophilisation, than can be observed as a better drying and/or water sheeting.

In particular, the compounds and mixtures of the invention may be used in squeeze treatment of oil wells. They are especially effective in preventing barium sulphate scale. For example in oil wells the hole is typically flushed out with aqueous surfactant to provide a water wettable surface and then impregnated with a solution of the polymer of the present invention. The calcium salt may be formed in situ either by calcium in the formation, where the latter comprises limestone, or by prior, or subsequent, treatment of the hole with an aqueous calcium salt, e.g. where the formation comprises sandstone.

Effective concentrations may typically range from 0.1 to 200ppm, preferably 0.5 to 100ppm depending on the nature of the aqueous system. For relatively soft water 1 to 50ppm, e.g. 1.5 to 20ppm, most preferably 2 to 10ppm, may give useful corrosion protection. However for oil field scale prevention where barium sulphate is a problem concentrations in the range 5 to 50ppm, especially 8 to 25ppm, e.g. 10 to 20ppm, are preferred.

Other applications for which the co-polymers can be used are SMUT inhibitors, additives to oral hygiene preparations and dentifrices, setting retarders for cement or plaster, desalination scale inhibitors, treatment of desalination plant and for treating water used or produced in oil wells including injection water, produced water and water used for hydrostatic testing of pipelines, deflocculation, adhesion, pre-treatment, dispersant, sequestrants, chelating agents, foam controlling agents, corrosion inhibitor, builders, surfactants and sealants in the anodising of aluminium.

The co-polymers of the present invention also find application as deflocculants or dispersants for particulate inorganic substances (such as clays and calcium carbonate) and for other pigments, for cement and for soils in detergency.

The co-polymers of the present invention may be cross-linked via the amino group by the use of a conventional cross-linking agent, e.g. a diepoxide.

The co-polymers of the present invention are also effective as corrosion inhibitors for ferrous and non-ferrous metals (e.g. aluminium or galvanised steel) and as a surface treatment for aluminium in the preparation of lithographic plates.

The co-polymers of the present invention can also be used in corrosion inhibiting pigments. The corrosion inhibiting pigment may be a solid composition and may be prepared by reacting a concentrated aqueous solution of any of the co-polymers according to the invention with a base or salt of calcium, zinc, barium, aluminium or other polyvalent metal and precipitating a solid salt.

The corrosion inhibiting pigment may be dissolved or dispersed in an anti-corrosive paint, varnish, enamel, lacquer, or other coating formulation. The formulation may comprise a volatile liquid vehicle, such as water or a volatile organic solvent including petroleum spirit, turpentine, ketones, esters and/or aromatic hydrocarbon solvent, and/or a drying oil, such as linseed oil, soya oil, tung oil or dehydrated castor oil, which may optionally be dissolved in said volatile organic solvent or emulsified in said water.

The formulation typically may also comprise a resin, e.g. a polyester, urea formaldehyde, melamine, acrylic, alkyd, polyurethane, vinyl chloride, vinyl acetate, phenolic or epoxy resin dissolved or dispersed therein and/or a dispersed pigment. We prefer that the pigment should be or should comprise other corrosion inhibiting pigments such as red lead, potassium zinc chromate, metallic zinc or aluminium powder or zinc oxide and/or that the formulation should contain one or more of the other corrosion inhibitors referred to above in addition to the corrosion inhibiting pigment of the invention.

The coating compositions may additionally contain any of the conventional paint ingredients, including pigments such as titanium oxide, iron oxide, carbon black, phthalocyanine pigments or aluminium stearate, chlorinated rubber, polystyrene, silicone, asphalt, wetting agents, dispersants, emulsifiers, biocides, flocculants, marine antifoulants, antifoams, viscosifiers, fire retardants, fluorescers, aerosol propellants, talc, clay and/or plasticisers.

Alternatively the co-polymers of the invention may be used to provide a corrosion inhibiting treatment for metal surfaces such as steel, aluminium and aluminium alloys after any machining and prior to storage, coating, electroplating, polishing or etching. Typically the work is coated with an aqueous solution containing at least an operative amount of said corrosion inhibitor, e.g. 10 to 500ppm, preferably 25 to 300ppm, e.g. 20 to 200ppm especially 25 to 100ppm, more especially 30 to 80ppm.

After contacting with the corrosion inhibiting solution the work may be rinsed and/or subjected to one or more coating or finishing operations such as resin coating, lacquering, enamelling, painting, electrophoretic coating, spattering, vapour deposition, electrodeposition, etching, chemical or electrical polishing or may be put aside for storage.

The work may be greased for storage, but an advantage of the treatment is that greasing and hence subsequent degreasing may be avoided.

The co-polymer of the present invention may be incorporated into solid or liquid detergent compositions. It functions as a stain remover and also may help to stabilise any bleach present and exhibits valuable detergent building action by sequestering calcium. Typically it is added to detergent compositions in amounts of from 0.5 to 20% by weight of the composition.

The liquid detergent of our invention preferably contains 5 to 50%, e.g. 10 to 40% by weight surfactant, 5 to 60%, e.g. 10 to 40% builder, 20 to 75%, e.g. 40 to 70% by weight water and 0.1 to 2.5% of the co-polymer. The liquid detergent preferably also contains conventional amounts of minor adjuncts including enzymes, soil suspenders such as sodium carboxymethyl cellulose, optical brighteners, dyes, perfumes, preservatives and foam modifiers.

The builder preferably comprises non-phosphate builders such as zeolite, carbonate, citrate, nitrilotriacetate and ethylene diamine tetracetate.

The detergent formulations of the invention may contain from 1 to 90% by weight of surfactant, more usually 2 to 70%, e.g. 3 to 60% especially 4 to 50%, preferably 5 to 40%, more preferably 6 to 30%, most preferably 7 to 20%.

The co-polymers of the present invention are effective for the inhibition of scale caused by metal carbonates and basic carbonates (particularly those of metals of Group IIA of the Periodic Classification), as well as scale caused by carboxylates, fluorides, hydroxides, phosphates, phosphonates, silica, silicates and sulphates.

The co-polymers of the present invention may be used in aqueous based functional fluids such as hydraulic fluids, lubricants, cutting fluids and oilfield drilling muds.

The co-polymers of this invention may be used in solid or liquid detergent compositions for wet or dry cleaning. These compositions, can contain ionic, cationic, amphoteric, semipolar and/or non-ionic surfactants, with or without an additional builder or co builder such as a zeolite, sodium tripoly phosphate, potassium pyrophosphate, sodium citrate, sodium nitrilotriacetate or sodium carbonate and optionally at least one of bleaching agents e.g. perborate, antiredeposition agents, buffers, dyes, perfumes, optical brightening agents, fillers and other detergent adjuvents. Such detergent compositions can have one or more surfactants usually in a total amount of 3-50%, such as an ionic surfactant 0-50% typically, 5 to 30% e.g. 10-20%, a nonionic surfactant 0-50% e.g. 3-20%, a soap 0-50% e.g. 1-30%, typically 2 to 3%, an enzyme 0-5% e.g. 0.1-2%, a bleaching agent 0-35% e.g. 2-10%, a builder 0-50% e.g. 15-35% especially 10-30%, sodium silicate 0-10% e.g. 4-10%, an antiredeposition agent such as sodium carboxy methyl cellulose 0-5% e.g. 0.5-5%, an organic solvent e.g. ethanol usually in a proportion of 0-30% e.g. 2 to 10%, one or more sequestrants such as a phosphate 0-10% e.g. 0.2-5%, a peroxide activator e.g. tetraacetyl ethylene diamine 0-5% e.g. 0.1-4%, a buffer e.g. borax or an organic base usually in amounts of 0-10% e.g. 2-8%, an optical brightener 0-5% e.g. 0-4%, a perfume 0-5% e.g. 0-2%, water 0-80%, and a phosphinate according to this invention usually in an amount of 0.1-60% e.g. 0.5-50%,

preferably 1 to 40%, more preferably 2 to 30%, most preferably 3 to 20%. Liquid detergents according to our invention typically contain 20 to 75% by wt., more usually 30 to 60%, of water. Solid detergents usually contain 10 to 75% by wt., more usually 30 to 60% e.g. 40 to 50% of a filler such as sodium sulphate.

Additionally the co-polymers of this invention can be used as peroxide stabilizers e.g. in pulp bleaching, typically as a 0.01-5% solution, as corrosion and scale, especially calcium silicate scale, inhibitors, in a concentration of 0.1-50 ppm in water systems such as boiler water or cooling water, as a water softener in amounts in molar excess over the dissolved metal ions and as deflocculating agents in solutions of concentration 0.01-5%.

The co-polymers of this invention may be in the form of mixtures with at least one of hydrochloric, sulphuric, phosphorous or phosphoric acids, or salts thereof, especially with hydrochloric acid e.g. in amount of 0.1 - 10g/l hydrochloric acid but preferably 0.1-1g/l. Also they may be used as a mixture with each other, or with their precursors such as formaldehyde, amines, ketones, and aldehydes, or with byproducts such as $(HOCH_2)_2P(O)OH$ or N-methylated amines such as $RR'NCH_3$, $CH_3NR(R''NR)_nCH_3$ or oligomers or polymers with a repeating unit of the block amino phosphinate polymer of the present invention and one or more terminal units - $PO(OH)CR'_2NR(R''NR)_nCH_3$.

In a particular embodiment of the invention, the copolymers of the invention are use in a dishwashing compositions, preferably in an automatic dishwashing composition. Such compositions can be in liquid, gel, loose or compacted powder form; preferentially, it is in the form of single-layer or multilayer tablets.. The amount of copolymer used in the composition can be for example comprised between 0.1 part and 20 parts, preferably from 0.5 to 10 parts, preferably from 0.5 to 5 parts, per 100 parts of composition (as dry matter). Once diluted with water in the automatic dishwasher, the amount of copolymer to water (during use) can be of from 1 ppm to 5000 ppm, preferably from 10 ppm to 1000 ppm, for example from 100 ppm to 500 ppm.

The automatic dishwashing composition can be a regular composition, or a so-called 2-in-1, 3-in-1, or even 4-in-1, providing benefits of cleaning compositions, rinsing compositions, regenerating compositions, and/or other.

The automatic dishwashing composition usually comprises at least one surfactant. The latter is advantageously anionic and/or nonionic. It can also be cationic, amphoteric or zwitterionic.

The copolymer / surfactant ratio by weight is advantageously between 1/2 and 1/100, advantageously 1/5 and 1/50.

Mention may in particular be made, among anionic surfactants, of soaps, such as salts of $C_8$-$C_{24}$ fatty acid, for example salts of fatty acids derived from copra and from tallow; alkylbenzenesulfonates, in particular alkylbenzenesulfonates with a linear $C_8$-$_{C13}$ alkyl, in which the alkyl group comprises from 10 to 16 carbon atoms, alcohol sulfates, ethoxylated alcohol suphates, hydroxyalkylsulfonates; alkyl sulfates and alkylsulfonates, in particular with a $C_{12}$-$C_{16}$ group, monoglyceride sulfates and condensates of fatty acid chloride with hydroxyalkylsulfonates.

Advantageous anionic surfactants are, in particular:

- alkyl ester sulfonates of formula $R-CH(SO_3M)-COOR'$, where R represents a $C_{8-20}$, preferably $C_{10}$-$C_{16}$, alkyl radical, R' a $C_1$-$C_6$, preferably $C_1$-$C_3$, alkyl radical and M an alkali metal (sodium, potassium or lithium) cation, a substituted or unsubstituted ammonium (methyl-, dimethyl-, trimethyl- or tetramethylammonium, dimethylpiperidinium, and the like) cation or a cation derived from an alkanolamine (monoethanolamine, diethanolamine, triethanolamine, and the like). Mention may very particularly be made of methyl ester sulfonates in which the R radical is a $C_{14}$-$C_{16}$ radical;
- alkyl sulfates of formula $ROSO_3M$, where R represents a $C_6$-$C_{24}$, preferably $C_{10}$-$C_{18}$, alkyl or hydroxyalkyl radical, M representing a hydrogen atom or a cation with the same definition as above, and their ethoxylenated (EO) and/or propoxylenated (PO) derivatives, having on average from 0.5 to 30, preferably from 0.5 to 10, EO and/or PO units;
- alkylamide sulfates of formula $RCONHR'OSO_3M$ where R represents a $C_2$-$C_{22}$, preferably $C_6$-$C_{20}$, alkyl radical, R' a $C_2$-$C_3$ alkyl radical, M representing a hydrogen atom or a cation with the same definition as above, and their ethoxylenated (EO) and/or propoxylenated (PO) derivatives having on average from 0.5 to 60 EO and/or PO units;
- salts of saturated or unsaturated $C_8$-$C_{24}$, preferably $C_{14}$-$C_{20}$, fatty acids, $C_9$-$C_{20}$ alkylbenzenesulfonates, primary or secondary $C_8$-$C_{22}$ alkylsulfonates, alkylglycerolsulfonates, the sulfonated polycarboxylic acids disclosed in GB-A-1,082,179, paraffin sulfonates, N-acyl-N-alkyltaurates, alkyl phosphates, isethionates, alkylsuccinamates, alkyl sulfosuccinates, sulfosuccinate monoesters or diesters, N-acyl-sarcosinates, alkylglycoside sulfates, or polyethoxycarboxylates, the cation being an alkali metal (sodium, potassium or lithium), a substituted or unsubstituted ammonium residue (methyl-, dimethyl-, trimethyl- or tetramethylammonium, dimethylpiperidinium, and the like) or a residue derived from an alkanolamine (monoethanolamine, diethanolamine, triethanolamine, and the like);
- alkyl or alkylaryl phosphate esters, such as Rhodafac RA600, Rhodafac PA15 or Rhodafac PA23, sold by the company Rhodia.

Mention may in particular be made, among nonionic surfactants, of condensates of alkylene oxide, in particular of ethylene oxide, with alcohols, polyols, alkylphenols, fatty acid esters, fatty acid amides and fatty amines; amine oxides, sugar derivatives, such as alkylpolyglycosides or fatty acid esters of sugars, in particular sucrose monopalmitate; long-chain tertiary phosphine oxides; dialkyl sulfoxides; block copolymers of polyoxyethylene and of polyoxypropylene; polyalkoxylated sorbitan esters; fatty esters of sorbitan, poly(ethylene oxide)s and fatty acid amides modified so as to give them a hydrophobic nature (for example, fatty acid mono- and diethanolamides comprising from 10 to 18 carbon atoms).

Mention may particularly be made of

polyoxyalkylenated (polyethoxyethylenated, polyoxypropylenated or polyoxybutylenated) alkylphenols in which the alkyl substituent is a $C_6$-$C_{12}$ alkyl substituent and which comprise from 5 to 25 oxyalkylene units; mention may be made, by way of example, of Triton X-45, X-114, X-100 or X-102, sold by Rohm & Haas Co.;

glucosamides, glucamides or glycerolamides;

polyoxyalkylenated $C_8$-$C_{22}$ aliphatic alcohols comprising from 1 to 25 oxyalkylene (oxyethylene, oxypropylene) units. Mention may be made, by way of example, of Tergitol 15-S-9 or Tergitol 24-L-6 NMW, sold by Union Carbide Corp., Neodol 45-9, Neodol 23-65, Neodol 45-7 or Neodol 45-4, sold by Shell Chemical Co., or Rhodasurf IDO60, Rhodasurf LA90 or Rhodasurf IT070, sold by the company Rhodia;

• amine oxides, such as ($C_{10}$-$C_{18}$ alkyl)dimethylamine oxides or ($C_8$-$C_{22}$ alkoxy)ethyldihydroxyethylamine oxides;
• the alkylpolyglycosides disclosed in US-A-4,565,647;
• $C_8$-$C_{20}$ fatty acid amides;
• ethoxylated fatty acids;
• ethoxylated amines.

Cationic surfactants are, in particular, alkylammonium salts of formula $R^1R^2R^3R^4N^+X^-$, where
$X^-$ represents a halide, $CH_3SO_4^-$ or $C_2H_5SO_4^-$ ion
$R^1$ and $R^2$ are alike or different and represent a $C_1$-$C_{20}$ alkyl radical or an aryl or benzyl radical
$R^3$ and $R^4$ are alike or different and represent a $C_1$-$C_{20}$ alkyl radical, an aryl or benzyl radical or an ethylene oxide and/or propylene oxide condensate $(CH_2CH_2O)_x$-$(CH_2CHCH_3O)_y$-H, where x and y range from 0 to 30 and are never simultaneously zero,

such as cetyltrimethylammonium bromide, Rhodaquat® TFR, sold by the company Rhodia.

Examples of zwitterionic surfactants comprise aliphatic quaternary ammonium derivatives, in particular 3-(N, N-dimethyl-N-hexadecylammonio)propane-1-sulfonate and 3-(N,N-dimethyl-N-hexadecylammonio)-2-hydroxypropane-1-sulfonate.

Examples of amphoteric surfactants comprise betaines, sulfobetaines and carboxylates and sulfonates of fatty acids and of imidazole.

The following surfactants are preferred:

alkyl dimethyl betaines, alkyl amidopropyldimethyl betaines, alkyl dimethyl sulfobetaines or alkyl amidopropyldimethyl sulfobetaines, such as Mirataine CBS, sold by the company Rhodia, or the condensation products of fatty acids and of protein hydrolysates;

· alkyl amphoacetates or alkyl amphodiacetates in which the alkyl group comprises from 6 to 20 carbon atoms;
· amphoteric alkyl polyamine derivatives, such as Amphionic XL®, sold by Rhodia, or Ampholac 7T/X® and Ampholac 7C/X®, sold by Berol Nobel.

Additional examples of suitable surfactants are compounds generally used as surfactants denoted in the well-known texts "Surface Active Agents", volume I, by Schwartz and Perry, and "Surface Active Agents and Detergents", volume II, by Schwartz, Perry and Berch.

The surfactants can be present, if necessary, in a proportion of 0.005 to 60%, in particular of 0.5 to 40%, by weight, depending on the nature of the surfactant(s) and on the destination of the cleaning or rinsing composition.

Mention may be made, among the other common additives which are part of automatic dishwashing compositions:

♦ organic builders or cobuilders (detergency adjuvants enhancing the surface properties of the surfactants) of the following types:

- water-soluble aminophosphonates and organic phosphonates such as

  • 1-hydroxyethane-1,1-diphosphonates
  • aminotri(methylenediphosphonate)
  • vinyldiphosphonates
  • salts of oligomers or polymers of vinylphosphonic or vinyldiphosphonic acid
  • sals of random copolymers or cooligomers of vinylphosphonic or vinyldiphosphonic acid and acrylic acid and/or maleic anhydride and/or vinylsulphonic acid and/or acrylamidomethylpropanesulphonic acid

• salts of phosphonated polycarboxylic acids
• polyacrylates containing terminal phosphonate group(s)
• salts of cotelomers of vinylphosphonic or vinyldiphosphonic acid and acrylic acid

such as those from the RHODIA BRIQUEST® or MIRAPOL A300 or 400 range (at from 0 to 2% of the total weight of detergent composition, expressed in terms of dry matter);

- polycarboxylic acids or their water-soluble salts and water-soluble salts of carboxylic polymers or copolymers such as

• polycarboxylate or hydroxypolycarboxylate ethers
• polyacetic acids or their salts (nitriloacetic acid, N,N-dicarboxymethyl-2-aminopentanedioic acid, ethylenediaminetetraacetic acid, diethylenetriaminepentaacetic acid, ethylenediaminetetraacetates, nitrilotriacetates, or N-(2-hydroxyethyl)nitrilodiacetates) (at from 0 to 10% of the total weight of detergent composition, expressed in terms of dry matter);
salt of ($C_5$-$C_{20}$ alkyl)succinic acids
polycarboxylic acetal esters
salt of polyaspartic or polyglutamic acids
nitric acid, gluconic acid or tartaric acid or their salts (at from 0 to 10% of the total weight of detergent composition, expressed in terms of dry matter in the case of a dishwasher composition);

- copolymers of acrylic acid and maleic anhydride or homopolymers of acrylic acid, such as Rhodia's Rhodoline DP 226 35 and BASF's Sokalan CP5 (at from 0 to 10% of the total weight of the said detergent composition, expressed in terms of dry matter);

♦ inorganic builders (detergency adjuvants enhancing the surface properties of the surfactants) of the following types:

- alkali metal, ammonium or alkanolamine polyphosphates such as RHODIAPHOS HD7 sold by the company RHODIA (at from 0 to 70% of the total weight of detergent composition, expressed in terms of dry matter);
- alkali metal pyrophosphates;

  - alkali metal silicates whose $SiO_2/M_2O$ ratio may range from 1 to 4, preferably from 1.5 to 3.5, very particularly from 1.7 to 2.8; they may be amorphous silicates or phyllosilicates such as the α, β, γ and δ phases of $Na_2Si_2O_5$, sold under the designations NaSKS-5, NaSKS-7, NaSKS-11 and NaSKS-6 by CLARIANT;
  - alkali metal or alkaline earth metal borates, carbonate, bicarbonates and sesquicarbonates (in an amount which may range up to approximately 50% of the total weight of the said detergent composition, expressed in terms of dry matter);
  - cogranules of alkali metal silicate hydrates with an $SiO_2/M_2O$ ratio which may range from 1.5 to 3.5 and of alkali metal (sodium or potassium) carbonates; mention may be made in particular of cogranules in which the weight amount of water combined with the silicate relative to the dry silicate is at least 33/100, in which the weight ratio of silicate to carbonate may range from 5/95 to 45/55, preferably from 15/85 to 35/65, as described in EP-A-488 868 and EP-A-561 656, such as NABION 15 sold by the company RHODIA;

(it being possible for the total amount of organic and/or inorganic builders to represent up to 90% of the total weight of the said detergent composition, expressed in terms of dry matter);
♦ bleaches of the perborate type or percarbonate type which may or may not be combined with acetylated bleach activators such as N,N,N',N'-tetraacetylethylenediamine (TAED) or chlorinated products of the chloroisocyanurate type, or chlorinated products of the alkali metal hypochlorite type (at from 0 to 30% of the total weight of the said detergent composition, expressed in terms of dry matter, in the case of a dishwasher composition);
♦ fillers of the sodium sulphate or sodium chloride type at from 0 to 50% of the total weight of the said composition, expressed in terms of dry matter;
♦ bleaching catalysts comprising a transition metal, especially complexes of iron, manganese and cobalt, such as those of the type $[Mn^{IV}_2(\mu\text{-}O)_3(Me_3TACN)_2](PF_6)_2$, $[Fe^{II}(MeN_4Py)(MeCN)](ClO_4)_2$ or $[(Co^{III})(NH_3)_5(OAc)](OAc)_2$, which are described in US-A-4,728,455, 5,114,606, 5,280,117, EP-A-909 809, US-A-5,559,261, WO 96/23859, 96/23860 and 96/23861;
♦ various other additives, such as agents which influence the pH of the detergent composition, especially alkalifying additives which are soluble in the washing liquor or enzymes or fragrances, dyes and agents which inhibit metal corrosion.

A 3-in-1 washing and rinsing composition differs from a 2-in-1 washing and rinsing composition in particular in a higher concentration of organic builders and of sodium tripolyphosphate.

Preferentially, a 3-in-1 washing and rinsing composition comprises

- more than 40% of sodium tripolyphosphate
- more than 1% of at least one water-soluble aminophosphonate or organic phosphonate
- at least 2% of organic polymer builders or acrylic copolymer builders.

In one particularly advantageous embodiment the copolymers are use in the form of solid preformulation product, especially in the form of granules, comprising the said copolymer adsorbed and/or absorbed on a water-soluble solid inorganic support, such as silica, STPP, or a carbonate base support.

A number of embodiments of the present invention will now be illustrated by the following examples.

## EXAMPLES

### Oligomer Preparation Method 1

To a 1.5L reactor fitted with a reflux condenser, temperature probe and $N_2$ gas line was added 214g sodium hypophosphite (85%w/w) and water (550ml).

Sodium persulphate (14.9g), an initiator, was dissolved in water (50m1). Propargyl alcohol (116.8g) was dissolved in water (195g).

The reaction mixture was heated to reflux (approximately 105°C) under an inert atmosphere. At reflux the initiator solution was added at steady rate over 4.5 hours and the propargyl alcohol solution was steadily added through a peristaltic pump over 210 minutes. Upon completion of the feeds the reaction was maintained at reflux for 1 hour before cooling to room temperature.

### Oligomer preparation Method 2

To a 1-L oil jacketed reactor fitted with overhead stirrer, temperature probe and condenser was added ethanolamine (61g, 1.0mol) in deionised water (400ml). Hydrochloric acid (101.6g, 36%w/w, 1.0mol) was added slowly followed by hypophosphorous acid (158.4g, 50%w/w, 1.2 mol). The solution was heated to 100°C under nitrogen. Formaldehyde (166g, 36%w/w, 2.0 mol) was added via a dosing pump over 2.5 hours. After the addition the reaction mixture was aged for 1 hour and then cooled to room temperature. The reaction yield was 850g, the molecular weight was determined to be 711 (using Polyacrylic acid standards).

A small sample was adjusted to pH 14 for analysis by $^{31}P$ NMR. The degree of oligomerisation was calculated as p = 6.6 from the $^{31}P$ NMR spectra using the calculation below.

$$p = 1 + [\text{P internal (36-43ppm)}/\ 0.5\ (\text{P-external, 23-25ppm})]$$

### Oligomer preparation Method 3

To a 1-L oil jacketed reactor fitted with overhead stirrer, temperature probe and condenser was added glycine (75g, 1.0mol) in deionised water (400ml). Hydrochloric acid (101.6g, 36%w/w, 1.0mol) was added slowly followed by hypophosphorous acid (158.4g, 50%w/w, 1.2 mol). The solution was heated to 100°C under nitrogen. Formaldehyde (166g, 36%w/w, 2.0 mol) was added via a dosing pump over 3 hours. After the addition the reaction mixture was aged for 1 hour and then cooled to room temperature. The product was diluted with DI water (250ml) and adjusted to pH 6 with NaOH (46-48%w/w) to give a fully soluble lightly coloured liquid. The reaction yield was 1200g.

A small sample was adjusted to pH 14 for analysis by $^{31}P$ NMR. The degree of oligomerisation was calculated as p = 4.6 from the $^{31}P$ NMR spectra using the calculation below.

$$p = 1 + [\text{P internal (36-43ppm)}/\ 0.5\ (\text{P-external, 23-25ppm})]$$

**Oligomer preparation Method 4**

An oligomer was made as follows. An aqueous solution of 1,8-diaminooctane (147g in 330ml of water) was mixed with hypophosphorous acid (264g of a 50% by weight aqueous solution) and hydrochloric acid (203g of a 36% by weight aqueous solution) to give a solution of pH 1. This solution was then heated to reflux and formaldehyde (160g of a 37.5% by weight aqueous solution) was added dropwise over a period of 30 minutes. The reaction mixture was refluxed in total for a period of 60 minutes. The resulting mixture was then allowed to cool to room temperature and then adjusted to pH 14 for analysis only, by the addition of sodium hydroxide (2g of 47% by weight aqueous solution to 2g of the reaction mixture). The reaction yield was 1104g. Gel permeation chromatography gave molecular weight of 380 grams per mole with a polydispersity of 1.9. The product was characterized by $^{31}P$ NMR, the spectrum showed an oligomeric product with 74% phosphinic acid groups which could be further reacted. An aqueous solution of the product (80g in 43ml of water) was adjusted to pH 4 by the addition of sodium hydroxide (5g of 47% by weight aqueous solution) to form mixture oligmer 3.

**Oligomer preparation Method 5**

An oligomer was made as follows. An aqueous solution of 1,12-diaminododecane (204g in 624ml of water) was mixed with hypophosphorous acid (264g of a 50% by weight aqueous solution) and hydrochloric acid (203g of a 36% by weight aqueous solution) to give a solution of pH 1. This solution was then heated to reflux and formaldehyde (160g of a 37.5% by weight aqueous solution) was added dropwise over a period of 30 minutes. The reaction mixture was refluxed in total for a period of 60 minutes. The resulting mixture was then allowed to cool to room temperature and then adjusted to pH 14 for analysis only, by the addition of sodium hydroxide (2g of 47% by weight aqueous solution to 2g of the reaction mixture). The reaction yield was 1455g. Gel permeation chromatography gave a molecular weight of 325 with a polydispersity of 1.2. The product was characterized by $^{31}P$ NMR, the spectrum showed an oligomeric product with 60% phosphinic acid groups which could be further polymerized. An aqueous solution of the product (100g) was adjusted to pH 4 by the addition of sodium hydroxide (7.5g of 47% by weight aqueous solution) to form mixture oligomer 4.

**Example 1.1**

An aqueous solution of Jeffamine D-230 (62.5g in 414ml of water) was mixed with 414g (23%w/w) of the oligomer made by method 1 described above. The solution was adjusted to pH 1 with hydrochloric acid (66.6g, 36%w/w). This solution was then heated to reflux and formaldehyde (70.2g, 37%w/w) was added drop wise over a period of 30 minutes. The reaction mixture was held at reflux for a further 30 minutes. The resulting mixture was cooled to room temperature and a small sample was adjusted to pH 14 with sodium hydroxide to facilitate analysis by NMR.

The reaction yield was 998g. Gel permeation chromatography gave a molecular weight of 682 (Polyacrylic acid standards were used). The product was characterised by $^{31}P$ NMR, the spectrum showed a polymeric product with 90% aminophosphinate groups.

The co-polymer obtained is of the formula:

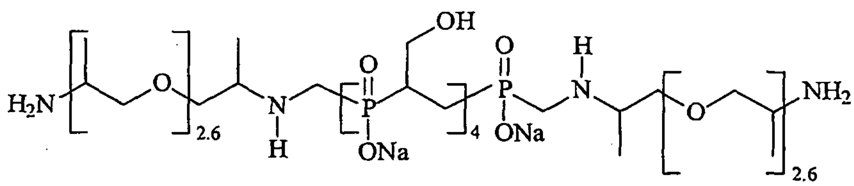

**Example 1.2**

An aqueous solution of 1,12-Diaminododecane (66g in 447ml of water) was mixed with 490g (23%w/w) of the oligomer of method 1 described above. The solution was adjusted to pH 1 with hydrochloric acid (92g, 36%w/w). This solution was then heated to reflux and formaldehyde (46.8g 37%w/w) was added drop wise over a period of 30 minutes. The reaction mixture was refluxed for a further 30 minutes and then cooled to room temperature; the reaction yield was 1158g.

A sample was adjusted to pH 14 with NaOH to facilitate analysis by NMR. Gel permeation chromatography gave a molecular weight of 840 (Polyacrylic acid standards were used). The product was characterised by $^{31}P$ NMR, the spectrum showed a polymeric product with 86% aminophosphinate groups.

The co-polymer obtained is of the formula:

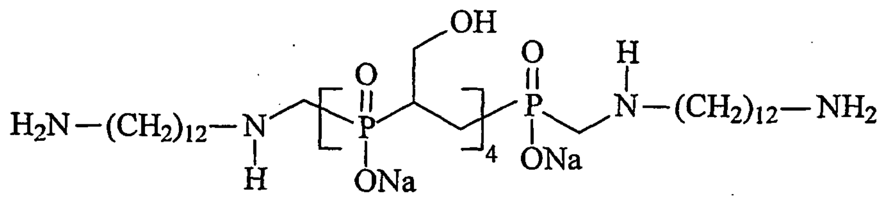

**Example 1.3 - Comparative Example**

Part 1 - An aqueous solution of poly(propylene glycol) bis (2-amino-propyl ether) (115g in 476ml of water) was mixed with hypophosphorous acid (132g of a 50% by weight aqueous solution) and hydrochloric acid (101.4g of a 36% by weight aqueous solution) to give a solution of pH 1. This solution was then heated to reflux and formaldehyde (80g of a 37.5% by weight aqueous solution) was added dropwise over a period of 30 minutes. The reaction mixture was refluxed in total for a period of 60 minutes. The resulting mixture was then allowed to cool to room temperature and then adjusted to pH 14 for analysis only, by the addition of sodium hydroxide (2g of 47% by weight aqueous solution to 2g of the reaction mixture). The reaction yield was 904g. Gel permeation chromatography gave a molecular weight of 421 with a polydispersity of 1.8. The product was characterized by $^{31}P$ NMR, the spectrum showed an oligomeric product with 60% phosphinic acid groups which could be further polymerised.

An aqueous solution of the product of Part 1 (100g in 38ml of water) was adjusted to pH 4 by the addition of sodium hydroxide (10g of 47% by weight aqueous solution) - Mixture A.

An aqueous solution of acrylic acid (89g in 355ml of water) was adjusted to pH 4 by the addition of sodium hydroxide (42g of 47% by weight aqueous solution) - Mixture B.

A 1 L vessel was charged with half of Mixture A and heated to reflux. The remaining half of Mixture A was dissolved with half of Mixture B to give mixture C and added to the vessel over a period of 180 minutes. Simultaneously, an aqueous solution of sodium persulphate (8.8g in 117ml of water) was added dropwise over a period of 390 minutes. As mixture C was completed, the remaining half of Mixture B was added dropwise over a period 150 minutes. The reaction mixture was refluxed for a total of 450 minutes after which it was allowed to cool to room temperature. The product was characterized by gel permeation chromatography giving a molecular weight of 3047 and polydispersity of 2.9. The product was further characterized using $^{31}P$ NMR giving a spectrum, which accorded with the suggested product.

The co-polymer obtained is of the formula:

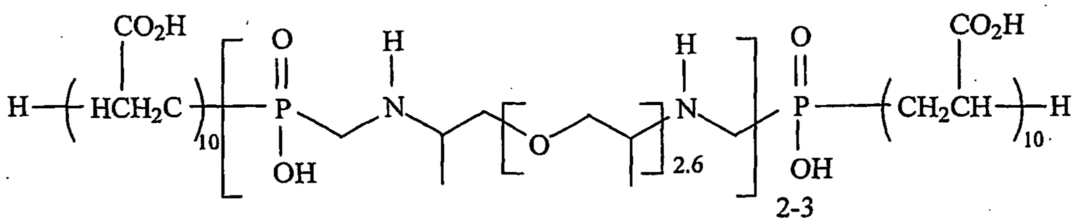

**Example 1.4**

To a 1-L oil jacketed reactor fitted with overhead stirrer, temperature probe and condenser was added dodecyl amine (37g, 0.2mol), hydrochloric acid (20g, 36%w/w, 0.2mol) and 200ml deionised water. The mixture was heated to 50°C and stirred for 1 hour, after which the amine had all dissolved. A portion of the product from oligomer preparation method 2 detailed above (424g, 0.1mol) was added with a further 200ml of deionised water. The reaction mixture was measured as pH 1 and was milky in colour and viscous.

The reaction was heated to 100°C under nitrogen and then formaldehyde (24.8g 36%w/w, 0.296mol) was added over 30 minutes using a dosing pump. After ageing for 1 hour, the reaction was cooled to room temperature.

A small sample was adjusted to pH 14 for analysis by $^{31}P$ NMR and the presence of 89.6% oligomeric product was calculated.

The reaction mixture was reheated to 100°C and a further portion of formaldehyde (2.48g) was added. After a further 1 hour the reaction mixture was cooled to room temperature. Upon standing the mixture separated into 2 layers but became homogeneous as sodium hydroxide (75g, 46-48%w/w) was added. The reaction yielded 961g of a brown

coloured product. A small sample was adjusted to pH 14 for analysis by $^{31}P$ NMR.

**Results**

$^{31}P$ NMR showed 94% broad polymeric peaks (35-40ppm),
The molecular weight was determined by gel permeation chromatography to be 725 (Polyacrylic acid standards were used for the calibration)
The solids content was measured as 17.5%w/w.
The co-polymer obtained is of the formula:

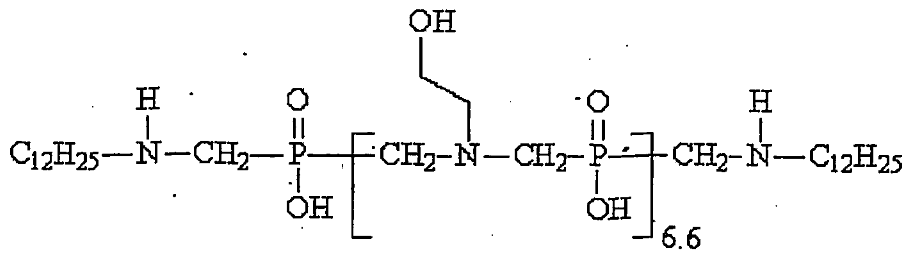

**Example 1.5**

A phosphinate compound according to formula:

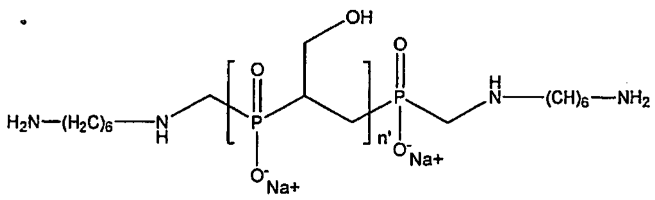

was made as follows.
An aqueous solution of 1,6-Diaminohexane (9.3g in 75ml of water) was mixed with 100g (23 wt%) of an oligomer made according to Oligomer Method 1. The solution was adjusted to pH 1 with hydrochloric acid (16g, 36 wt%). This solution was then heated to reflux and formaldehyde (6.7, 37 wt%) was added drop wise over a period of 30 minutes. The reaction mixture was refluxed for a further 30 minutes and then cooled to room temperature; the reaction yield was 188g of product. The product exhibited a weight average molecular weight of 792 grams per mole (as determined using gel permeation chromatography and polyacrylic acid standards).

**Example 1.6**

A compound according to formula:

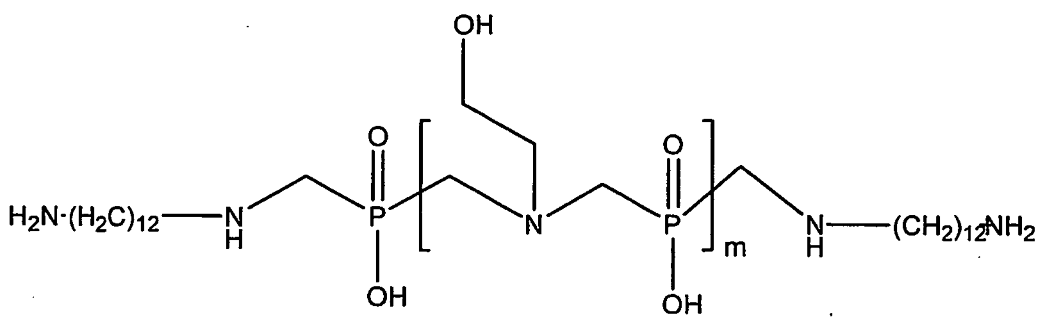

was made as follows:

To a 500ml flask was added 1,12-diaminododecane (11.4g), hydrochloric acid (6g, 36 wt%), deionized water (50ml) and an oligomer made according to Oligomer Method 2 (120g). The mixture was heated to 50°C and stirred for 1 hour, after which the amine had all dissolved. The reaction mixture was measured as pH 1 and was milky in color and viscous.

The reaction was heated to 100°C under nitrogen and then formaldehyde (4.8g 36 wt%) was added over 30 minutes using a dosing pump. After ageing for 1 hour, the reaction was cooled to room temperature.

The reaction yielded -190g of a light colored product. A small sample was adjusted to pH 14 for analysis by $^{31}P$ NMR and the presence of 80% oligomeric product was calculated. The molecular weight was determined, using gel permeation chromatography and polyacrylic acid standards, to be 429.

**Example 1.7**

A phosphinate compound according to the formula:

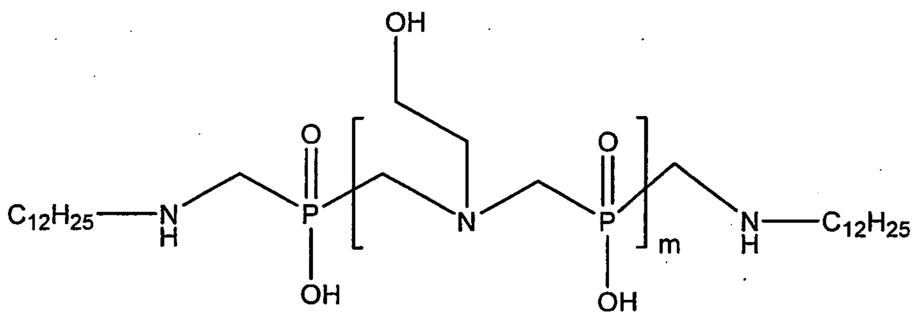

was made as follows.

To a 1-L oil jacketed reactor fitted with overhead stirrer, temperature probe and condenser was added dodecyl amine (37g, 0.2mol), hydrochloric acid (20g, 36 wt%, 0.2mol) and 200ml deionized water. The mixture was heated to 50°C and stirred for 1 hour, after which the amine had all dissolved. An oligomer made according to Oligomer Method 2 (424g, 0.1mol) was added with a further 200ml of deionized water. The reaction mixture was measured as pH 1 and was milky in color and viscous.

The reaction was heated to 100°C under nitrogen and then formaldehyde (24.8g 36 wt%, 0.296mol) was added over 30 minutes using a dosing pump. After ageing for 1 hour, the reaction was cooled to room temperature. At this point, a small sample was adjusted to pH 14 for analysis by $^{31}P$ NMR and the presence of 89.6% oligomeric product was calculated.

The reaction mixture was then reheated to 100°C and a further portion of formaldehyde (2.48g) was added. After a further 1 hour the reaction mixture was cooled to room temperature. Upon standing the mixture separated into 2 layers but became homogeneous as sodium hydroxide (75g, 46-48 wt%) was added. The reaction yielded 961g of a brown colored product.

The solids content of the product was measured as 17.5 wt%. A small sample was adjusted to pH 14 for analysis by $^{31}P$ NMR, and showed 94% broad polymeric peaks (35-40ppm). The product exhibited a weight average molecular weight of 725 grams per mole (as determined using gel permeation chromatography and polyacrylic acid standards).

**Example 1.8**

A phosphinate compound according to formula:

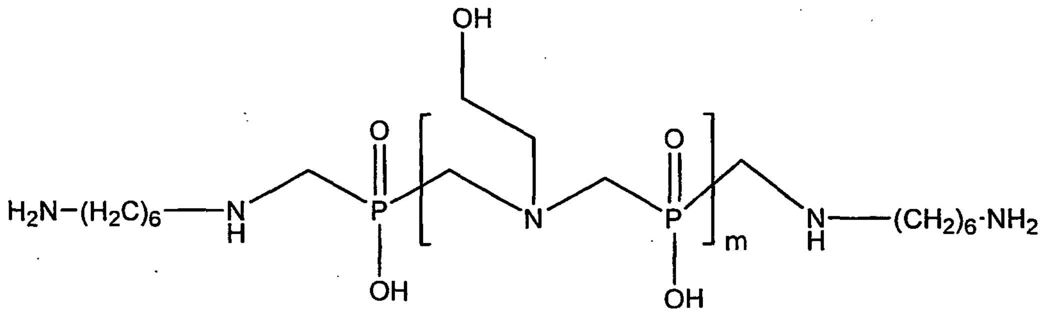

was made as follows:

To a 500ml flask was added 1,6-diaminohexane (5.8g, 0.05mol), hydrochloric acid (5g, 36 wt%, 0.05mol) and 100ml deionized water. The mixture was heated to 50°C and stirred for 1 hour, after which the amine had all dissolved. An oligomer made according to Oligomer Method 2 (106g, 0.025mol) was added. The reaction mixture was measured as pH 1 and was milky in color and viscous.

The reaction was heated to 100°C under nitrogen and then formaldehyde (4.2g 36 wt%, 0.05mol) was added over 30 minutes using a dosing pump. At this point, a small sample was adjusted to pH 14 for analysis by $^{31}P$ NMR and the presence of a few % of the starting oligomer was calculated. A further portion of formaldehyde (2.0g) was added. After a further 1 hour the reaction mixture was cooled to room temperature. The reaction yielded 220g of a brown colored product.

A small sample was adjusted to pH 14 for analysis by $^{31}P$ NMR, and showed 93% broad polymeric peaks (35-40ppm). The product exhibited a weighty average molecular weight of 763 grams per mole (as determined using gel permeation chromatography and polyacrylic acid standards).

**Example 1.9**

A phosphinate compound according to formula:

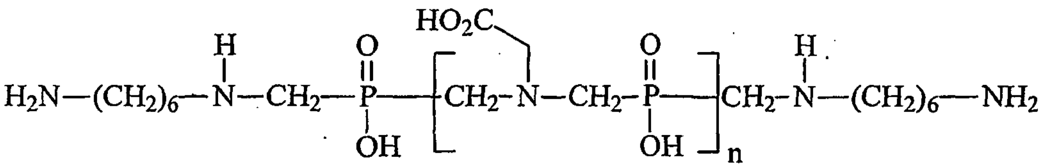

was made as follows

To a 500ml 3-necked flask was added 1,6-diaminohexane (10g, 85mmol), hydrochloric acid (8.5g, 36%w/w, 85mmol) and 50ml deionised water. The mixture was heated to 50°C and stirred for 1 hour, after which the amine had all dissolved. A portion of the product from oligomer preparation method 3 detailed above (193g, 42mmol) was added and reaction mixture was measured as pH 1.

The reaction was heated to 100°C under nitrogen and then formaldehyde (7g 36%w/w, 84mmol) was added over 30 minutes using a dosing pump. After ageing for 1 hour, the reaction was cooled to room temperature.

A small sample was adjusted to pH 14 for analysis by $^{31}P$ NMR, the spectra showed the reaction was incomplete as residual PH bonds were present.

The reaction mixture was reheated to 100°C and a further portion of formaldehyde (7g, 84mmol) was added. After a further 1 hour the reaction mixture was cooled to room temperature.

The reaction yielded 275g of a brown coloured product. A small sample was adjusted to pH 14 for analysis by $^{31}P$ NMR.

**Results**

$^{31}P$ NMR showed broad polymeric peaks (35-40ppm),

The molecular weight was determined by gel permeation chromatography to be 956 (Polyacrylic acid standards were used for the calibration)

The solids content was measured as 21.5%w/w.

### Example 1.10 - Comparative

A phosphinate compound according to formula:

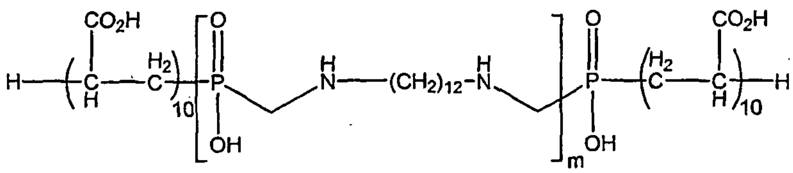

was made as follows.

An aqueous solution of acrylic acid (50g in 200ml of water) was adjusted to pH 4 by the addition of sodium hydroxide (23.4g of 47% by weight aqueous solution) to form mixture B.

A 1 L vessel was charged with half of mixture oligomer 5 and heated to reflux. The remaining half of mixture oligomer 5 was dissolved with half of mixture B to give mixture 48C and added to the vessel over a period of 180 minutes. Simultaneously, an aqueous solution of sodium persulphate (4.9g in 66 ml of water) was added dropwise over a period of 390 minutes. As mixture 8C was completed, the remaining half of mixture B was added dropwise over a period 150 minutes. The reaction mixture was refluxed for a total of 450 minutes after which it was allowed to cool to room temperature. The product exhibited a weight average molecular weight of 2373 grams per mole and a polydispersity of 2.4 (as determined using gel permeation chromatography and polyacrylic acid standards). The product was further characterized using $^{31}P$ NMR giving a spectrum which accorded with the suggested product.

### Example 1.11 - Comparative

A phosphinate compound according to formula:

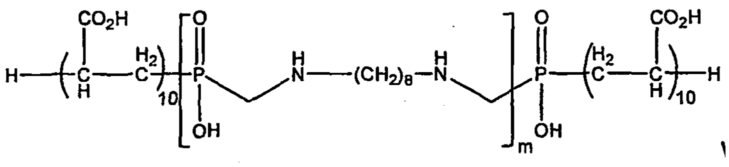

was made as follows.

An aqueous solution of acrylic acid (84g in 336ml of water) was adjusted to pH 4 by the addition of sodium hydroxide (30g of 47% by weight aqueous solution) to form mixture B'.

A 1 L vessel was charged with half of mixture oligomer 4 and heated to reflux. The remaining half of mixture oligomer 4 was dissolved with half of mixture B' to give mixture 7C and added to the vessel over a period of 180 minutes. Simultaneously, an aqueous solution of sodium persulphate (8.3g in 111 ml of water) was added dropwise over a period of 390 minutes. As mixture 8C was completed, the remaining half of mixture B' was added dropwise over a period 150 minutes.

The reaction mixture was refluxed for a total of 450 minutes after which it was allowed to cool to room temperature. The product exhibited a weight average molecular weight of 2473 grams per mole and a polydispersity of 2.9 (as determined using gel permeation chromatography and polyacrylic acid standards). The product was further characterized using $^{31}P$ NMR giving a spectrum which accorded with the suggested product.

### Example 2 - Stability

The stability of the polymer solution is measured at pH's 1, 5 and 9 as the concentration of polymer is increased from 1-5mg/L. The polymer solutions used are solutions of the co-polymer of the present invention as described in Example 1.1 and a comparative co-polymer as described in Example 1.3.

The stability of each solution is assigned as shown in the legend below and is recorded on each graph. A stable solution is visibly clear and is indicated in yellow on the graphs.

The stability is then measured in the presence of 1% NaCl, and 0.1 and 1% $CaCl_2$.

The phase diagrams in Figures 1 and 2 show significant differences in the stability of solutions that contain the products described in comparative Example 1.3 and Example 1.1 of the present application respectively.

Legend for Phase diagrams of pH versus concentration of polyphosphinate shown in Figure 1 and Figure 2:

- ■ Clear
- □ Bluish
- ■ Milky
- □ 2 phases

The graphs in Figures 1 and 2 show that the product described in the comparative Example 3 does not give stable solutions at low pH and that with 1% $CaCl_2$ the solutions are also unstable at high pH.
However, the graphs for Example 1.1 of the present application in Figure 2 show that each of the solutions are stable across the pH range evaluated. Furthermore, the solutions are stable with both 1% NaCl and 1% $CaCl_2$.
These properties make co-polymers like that of Example 1.1 potentially very useful dispersants in a range of applications. Including dispersion under extreme conditions.

**Example 3 - Dispersion of $CaSO_4$ in a gypsum salt**

The co-polymer of Example 1.1 was screened in $CaSO_4$ hemihydrate slurries for wallboard, joint treatment and sprayed texture applications.
When the $CaSO_4$ slurry is spread onto the substrate, the time taken for the salt to crystallise and the flow distance (or rate) is monitored.
As a requirement, an additive should not retard or slow down the setting time or the crystallization of the salt. Setting times of greater than 30 minutes are detrimental because this slows down the process. The co-polymer of Example 1.1 makes a significant impact on the crystallisation kinetics and does not adversely affect the setting time.
In relation to the flow rate, there is a desire is to increase the flow rate even at low dosages. The co-polymer of Example 1.1 does not really affect the flow kinetics at any of the concentrations screened.
However as the co-polymer does not lead to any detriment to the flow rate it is comparable in performance to a number of existing technologies in relation to flow rate enhancement and impacts significantly on the crystallisation kinetics without adversely affect the setting time, therefore the additive overall is beneficial in use with $CaSO_4$ hemihydrate slurries.

**Example 4 - Hydrophilisation of Plastics (in dishwashing application) copolymer of Example 1.2 alone or as an additive to detergent Somat 3-in-1 from Henkel**

In a test designed to measure the hydrophilisation of plastic surfaces, a washing cycle of a dishwasher loaded with three different plastic surfaces, is launched with either a commercial detergent by itself, or in combination with one of the copolymers described in the examples above.
The surfaces were melamine plates, SAN (styrene-acrylonitrile) box and Tupperware®, known to be hydrophobic.
After completion of the washing cycle, the three different plastics were inspected and graded according to their degree of dryness and to whether they allowed water sheeting when sprayed with water. Scores were assigned on a scale form -2 to +2 as shown below.
**-2** Droplets bounce or roll off the surface, -hydrophobic surface
**-1** Droplets stick to or slide on the surface, leaving no trace Droplets slide leaving traces which quickly retract, -surface
**0** neutral
**+1** Droplets slide leaving a trail which retracts slowly Trail does not retract, perfect water sheeting, -hydrophilic
**+2** surface
The test is designed to measure the hydrophilisation of plastics. Hence, +2 is a favourable result whereas -2 is a poor result with no benefit observed with the addition of polymer.
The surfaces are first washed with SOMAT 3-in-1, a commercial dishwasher tablet made by Henkel and is used as a reference for the performances of commercial solutions. Then the surfaces are washed with 5 g of dry copolymer of Example 1.2, added at the beginning of the cycle in the absence of detergent, or with a tablet of SOMAT 3-in-1 (20 to 25 g) combined with 5 g of dry copolymer of Example 1.2, added at the beginning of the cycle. We thereby test the hydrophilization properties of the copolymer of Example 1.2, alone or in combination with SOMAT 3-in-1, compared to what SOMAT 3-in-1 alone. The cycle uses 5 litres of water. The amount of copolymer to water is 1000 ppm.
When compared with the commercial standard, copolymer of Example 1.2 shows by itself improved hydrophilisation in relation to Tupperware® and comparable hydrophilisation in relation to SAN.
In combination with the commercial example, SOMAT 3-in-1, Example 1.2 brings a marked effect in the hydrophilisation of each of the three surfaces.

| | Melamine | SAN | Tupperware® |
|---|---|---|---|
| Reference washing of somat 3-in-1 alone | 1 | -1 | -2 |
| Performance of Example 1.2 alone | 0 | -1 | -1 |
| Performance of EXample 1.2 combined with Somat 3-in-1 | 2 | 2 | 0 |

**Example 5 - comparative examples : Hydrophilisation of Plastics (in dishwashing application)**

**copolymers of Example 1.10 and 1.11 alone**

As in Example 4, we test the hydrophilization performances of copolymers of examples 1.10, and 1.11 alone, and compare them to the hydrophilization performances of copolymer of example 1.2 alone and to the reference washing performances of SOMAT 3-in-1.

The plastic surfaces are graded according to the scale given in Example 4.

Unlike copolymer Example 1.2, none of the copolymers of Examples 1.10 and 1.11 give an improvement in relation to tupperware by themselves.

| | Tupperware® |
|---|---|
| Reference washing of somat 3-in-1 alone | -2 |
| Performance of Example 1.10 alone | -2 |
| Performance of Example 1.11 alone | -2 |
| Performance of Example 1.2 alone | -1 |

**Example 6 - Hydrophilisation of Plastics (in dishwashing application)**

**Copolymers as additives to Calgonite 4-in-1 from Reckitt Benckiser PLC**

As in Example 4, we test the hydrophilization performances of copolymers of examples 1.2, 1.4, 1.5 and 1.9 combined but with a commercial detergent different from that of Example 4: CALGONITE 4-in-1 is a commercial dishwasher tablet made by Reckitt Benckiser PLC and is used as a reference for the performances of commercial solutions. We compare the hydrophilization performances of copolymers examples 1.2, 1.4, 1.5 and 1.9 combined with CALGONITE 4-in-1, to the reference washing performances of CALGONITE 4-in-1 alone.

5g of copolymers were added into the wash cycle of a dishwasher loaded with Tupperwares®, known as one of the most difficult surface to hydrophilize. After completion of the wash cycle the Tupperwares® were inspected and graded according the scale given in Example 4.

In combination with CALGONITE 4-in-1, Example 1.4 brings a marked effect in the hydrophilisation of tupperwares, when compared with the commercial standard , CALGONITE 4-in-1 alone.

In combination with CALGONITE 4-in-1, Example 1.2, 1.5 and 1.9 perform less thant Example 1.4.

The amounts of water and/or Calgonite used are according to example 4

| | Tupperware® |
|---|---|
| Reference washing of calgonite 4-in-1 alone | -2 |
| Performance of Example 1.2 combined with calgonite 4-in-1 alone | -1 |
| Performance of Example 1.4 combined with calgonite 4-in-1 alone | 0 |
| Performance of Example 1.5 combined with calgonite 4-in-1 alone | -1 |
| Performance of Example 1.9 combined with calgonite 4-in-1 alone | -1 |

## Claims

**1.** A co-polymer or oligomer thereof, of the formula:

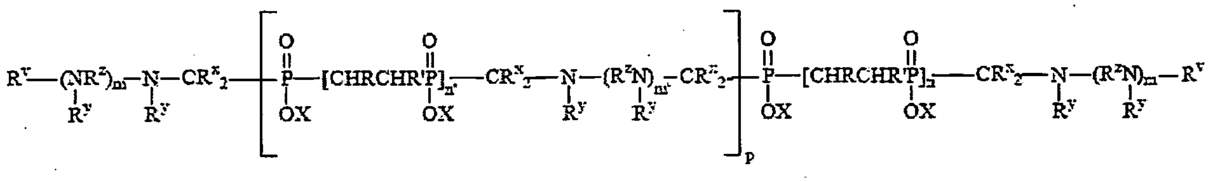

wherein:

- R and R' are each independently selected from hydrogen, a hydroxyl group, a carboxyl group, an alkyl, aryl or alkaryl group or a hydroxy - or carboxy - substituted alkyl, aryl or alkaryl group, provided that R and R' together have a total of less than 23 carbon atoms;
- X is hydrogen or a cation or an alkyl group;
- n and n', identical or different, are greater than or equal to 0;
- each of $R^y$ groups, which may be the same or different, and each of the $R^x$ groups, which may be the same or different, is hydrogen, an optionally substituted alkyl, cycloalkyl, alkenyl, aryl, aralkyl, alkaryl or alkoxyalkyl group of 1-20 carbon atoms each of which may be optionally substituted once or more than once;
- $R^z$ is an alkane group or a substituted alkane group or a heterocyclic group;
- m and m', identical or different, are zero or from 1 to 100;
- p is zero or from 1 to 100; and
- each of the $R^v$ groups, which may be the same or different, is hydrogen, an optionally substituted alkyl, cycloalkyl, alkenyl, aryl, aralkyl, alkaryl or alkoxyalkyl group of 1-20 carbon atoms each of which may be optionally substituted once or more than once.

**2.** A co-polymer according to claim 1 wherein:

- p = 0, and n is different from 0, or
- p is different from 0, n =0, and n' = 0.

**3.** A co-polymer according to any one of the preceding claims wherein the mid block is hydrophilic and the outer blocks of the co-polymer are hydrophilic or hydrophobic.

**4.** A co-polymer according to claim 3 wherein the outer blocks are hydrophobic.

**5.** A co-polymer according to any one of the preceding claims wherein all functional groups resident upon $R^y$, $R^x$ or $R^z$ do not irreversibly decompose in the presence of a carbonyl compound or hypophosphorous acid or inorganic acid.

**6.** A co-polymer according to any one of the preceding claims wherein the co-polymer has a molecular weight of between 300 and 500,000.

**7.** A co-polymer according to any one of the preceding claims wherein X is an alkali metal ion.

**8.** A co-polymer according to claim 7 wherein X is sodium, potassium or lithium.

**9.** A co-polymer according to any one of claims 1 to 6 wherein X is ammonium or organic substituted ammonium (including quaternary ammonium).

**10.** A. co-polymer according to claim 9 wherein X is triethyl- or triethanolammonium.

**11.** A co-polymer according to any one of claims 1 to 6 wherein X is quaternary phosphonium.

**12.** A co-polymer according to claim. 11 where X is tetrakis hydroxymethyl phosphonium.

**13.** A co-polymer according to any one of claims 1 to 6 wherein X is an alkaline earth metal ion.

**14.** A co-polymer according to claim 13 wherein X is calcium or magnesium.

**15.** A co-polymer according to any one of claims 1 to 6 wherein X is aluminium.

**16.** A co-polymer according to any one of the preceding claims wherein the $R^y$ groups represent hydrogen, substituted alkyl, aryl or heterocycles.

**17.** A co-polymer according to claim 16 wherein at least one $R^y$ group represents a group which carries one or more functional groups capable of coordinating to metal ions.

**18.** A co-polymer according to claim 16 wherein at least one $R^y$ group represents a group which carries one or more carbonyls, carboxyls, aminos, iminos, amidos, phosphonic acids, hydroxyls, sulphonic acids, arsenates, inorganic and organic esters thereof.

**19.** A co-polymer according to any one of the preceding claims wherein claims wherein the $R^x$ groups are all hydrogen atoms.

**20.** A co-polymer according to any one of claims 1 to 18 wherein $R^x$ groups are inpendently alkyl, aryl, cycloalkyl, aralkyl, or alkoxyalkyl.

**21.** A co-polymer according to claim 20 wherein the $R^x$ groups are substituted at least once.

**22.** A co-polymer according to any one of the preceding claims wherein the $R^z$ groups are substituted at least once with a carboxylic acid group, a sulphonic acid group, a phosphonic acid group or an amino group.

**23.** A co-polymer according to any one of the preceding claims wherein the co-polymer has one or more $R^z$ groups being an alkane, or a substituted alkane.

**24.** A co-polymer according to anyone of the preceding claims wherein the co-polymer is optically active.

**25.** A method of preparing a co-polymer of claim 1, and oligomers thereof, comprising the steps of:

(a) preparing a polymer of the formula (II) or (II');

(II) $$H\text{-}POOX[CHRCHR'POOX]_n\text{-}H$$

(II') $$H\text{-}[POOX[CHRCHR'POOX]_{n'}\text{-}CR^x{}_2\text{-}NR^y\text{-}(R^z\text{-}R^yN)_{m'}\text{-}CR^x{}_2]_p\text{-}H$$

where R, R', X, n, n', m', $R^x$, $R^y$, and $R^z$ have the same meaning as in any of the claims above; and
(b) subsequently

(i) adding an appropriate amine group; and
(ii) heating the resultant reaction mixture for 15 to 180 minutes in the presence of a carbonyl compound.

**26.** A method according to claim 25 wherein the reaction mixture is heated under reflux.

**27.** A method according to claim 25 or claim 26 wherein the reaction mixture is adjusted to be acidic.

**28.** A method according to claim 27 wherein the pH of the solution is adjusted to have a pH of 0.5 to 4.

**29.** A method according to either claims 27 or 28 wherein the pH of the solution is adjusted to have a pH of 0.5 to 3.

**30.** A method according to any one of claims 27 to 29 wherein the pH of the solution is adjusted to have a pH of 1.

**31.** A method according to any one of claims 27 to 30 wherein the pH of the solution is adjusted by the addition of an acid.

**32.** A method according to any one of claims 27 to 31 wherein the pH of the solution is adjusted by the addition of hydrochloric acid.

**33.** A method according to either of claims 31 or 32 wherein the acid is added before the solution is heated.

**34.** A method according to any one of the claims 25 to 33 wherein the carbonyl compound is added to the solution during heating under reflux.

**35.** A method according to any one of claims 25 to 34 wherein the carbonyl compound is added dropwise.

**36.** A method according to any one of claims 25 to 35 wherein the carbonyl compound is added over a period of 20 to 40 minutes.

**37.** A method according to any one of claims 25 to 36 wherein the carbonyl compound is added over a period of 30 minutes.

**38.** A method according to any one of claims 25 to 37 wherein the carbonyl compound is an aldehyde.

**39.** A method according to claim 38 wherein the aldehyde is formaldehyde.

**40.** A method according to any one of claims 25 to 39 wherein the solution is heated under reflux for 15 to 180 minutes after addition of the carbonyl compound.

**41.** A method according to claim 40 wherein the solution is heated under reflux for 30 to 120 minutes.

**42.** Use of a co-polymer according to any one of claims 1 - 24 or made by the method of any one of claims 25 to 41 as a scale or corrosion inhibitor, in cooling water treatment, treatment of industrial process water, boiler water treatment, treatment of water in central heating and air conditioning systems, desalination plants and for treating water used or produced in oil wells including injection water, produced water, water used for hydrostatic testing of pipelines, particularly for prevention of the deposit of calcium carbonate scale, as a SMUT inhibitor, additive to oral hygiene preparations and dentifrice, setting retarder for cement or plaster, deflocculator, in adhesion, in pre-treatment, as a dispersant, sequestrant, chelating agent, foam controlling agent, builder, surfactant, sealant in the anodising of aluminium, additive to detergent compositions, additive to an automatic dishwashing composition, additive for hydrophilisation of surfaces, additive for hydrophilisation of plastics, additive to aqueous based functional fluids or peroxide stabilizer.

## Patentansprüche

**1.** Copolymer oder Oligomer davon, der Formel:

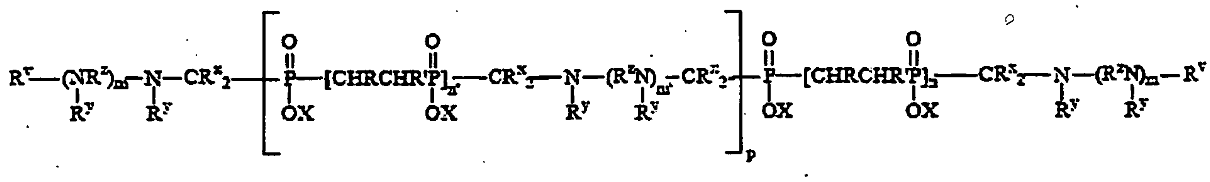

worin:

- R und R' jeweils unabhängig ausgewählt sind aus Wasserstoff, einer Hydroxyl-Gruppe, einer CarboxylGruppe, einer Alkyl-, Aryl- oder Alkaryl-Gruppe oder einer Hydroxy- oder Carboxy-substituierten Alkyl-, Aryl- oder Alkaryl-Gruppe, mit der Maßgabe, dass R und R' zusammen eine Summe von weniger als 23 Kohlenstoffatomen aufweisen;
- X Wasserstoff oder ein Kation oder eine Alkyl-Gruppe darstellt;
- n und n', gleich oder verschieden, größer als oder gleich 0 sind;
- jede der Gruppen $R^y$, die gleich oder verschieden sein können, und jede der Gruppen $R^x$, die gleich oder verschieden sein können, Wasserstoff, eine gegebenenfalls substituierte Alkyl-, Cycloalkyl-, Alkenyl-, Aryl-,

Aralkyl-, Alkaryl- oder Alkoxyalkyl-Gruppe mit 1 bis 20 Kohlenstoffatomen darstellt, wobei jede davon gegebenenfalls einmal oder mehr als einmal substituiert sein kann;
- $R^z$ eine Alkan-Gruppe oder eine substituierte Alkan-Gruppe oder eine heterocyclische Gruppe darstellt;
- m und m', gleich oder verschieden, null oder von 1 bis 100 sind;
- p null oder von 1 bis 100 ist; und
- jede der Gruppen $R^v$, die gleich oder verschieden sein können, Wasserstoff, eine gegebenenfalls substituierte Alkyl-, Cycloalkyl-, Alkenyl-, Aryl-, Aralkyl-, Alkaryl- oder Alkoxyalkyl-Gruppe mit 1 bis 20 Kohlenstoffatomen darstellt, wobei jede davon gegebenenfalls einmal oder mehr als einmal substituiert sein kann.

**2.** Copolymer nach Anspruch 1, worin:

- p = 0 und n von 0 verschieden ist, oder
- p von 0 verschieden ist, n = 0 und n' = 0.

**3.** Copolymer nach einem der vorangehenden Ansprüche, worin der mittlere Block hydrophil ist und die äußeren Blöcke von dem Copolymer hydrophil oder hydrophob sind.

**4.** Copolymer nach Anspruch 3, worin die äußeren Blöcke hydrophob sind.

**5.** Copolymer nach einem der vorangehenden Ansprüche, worin alle funktionellen Gruppen, die an $R^y$. $R^x$ oder $R^z$ vorliegen, sich nicht irreversibel in Gegenwart einer Carbonylverbindung oder hypophosphorigen Säure oder anorganischen Säure zersetzen.

**6.** Copolymer nach einem der vorangehenden Ansprüche, worin das Copolymer ein Molekulargewicht von zwischen 300 und 500 000 aufweist.

**7.** Copolymer nach einem der vorangehenden Ansprüche, worin X ein Alkalimetallion darstellt.

**8.** Copolymer nach Anspruch 7, worin X Natrium, Kalium oder Lithium darstellt.

**9.** Copolymer nach einem der Ansprüche 1 bis 6, worin X Ammonium oder organisch substituiertes Ammonium (einschließlich quaternäres Ammonium) darstellt.

**10.** Copolymer nach Anspruch 9, worin X Triethyl- oder Triethanolammonium darstellt.

**11.** Copolymer nach einem der Ansprüche 1 bis 6, worin X quaternäres Phosphonium darstellt.

**12.** Copolymer nach Anspruch 11, worin X Tetrakis-hydroxymethyl-phosphonium darstellt.

**13.** Copolymer nach einem der Ansprüche 1 bis 6, worin X ein Erdalkalimetallion darstellt.

**14.** Copolymer nach Anspruch 13, worin X Calcium oder Magnesium darstellt.

**15.** Copolymer nach einem der Ansprüche 1 bis 6, worin X Aluminium darstellt.

**16.** Copolymer nach einem der vorangehenden Ansprüche, worin die Gruppen $R^y$ Wasserstoff, substituiertes Alkyl, Aryl oder Heterocyclen wiedergeben.

**17.** Copolymer nach Anspruch 16, worin mindestens eine Gruppe $R^y$ eine Gruppe wiedergibt, die eine oder mehrere funktionelle Gruppen trägt, die an Metallionen koordinieren können.

**18.** Copolymer nach Anspruch 16, worin mindestens eine Gruppe $R^y$ eine Gruppe wiedergibt, die eine oder mehrere Carbonyl-, Carboxyl-, Amino-, Imino-, Amido-, Phosphonsäure-, Hydroxyl-, Sulfonsäure-, Arsenat-Gruppen, anorganische und organische Ester davon trägt.

**19.** Copolymer nach einem der vorangehenden Ansprüche, worin die Gruppen $R^x$ alle Wasserstoffatome darstellen.

**20.** Copolymer nach einem der Ansprüche 1 bis 18, worin die Gruppen $R^x$ unabhängig Alkyl-, Aryl-, Cycloalkyl-, Aralkyl-

oder Alkoxyalkyl darstellen.

**21.** Copolymer nach Anspruch 20, worin die Gruppen $R^x$ mindestens einmal substituiert sind.

**22.** Copolymer nach einem der vorangehenden Ansprüche, worin die Gruppen $R^z$ mindestens einmal mit einer CarbonsäureGruppe, einer Sulfonsäure-Gruppe, einer PhosphonsäureGruppe oder einer Amino-Gruppe substituiert sind.

**23.** Copolymer nach einem der vorangehenden Ansprüche, worin das Copolymer eine oder mehrere Gruppen $R^z$ aufweist, die ein Alkan oder ein substituiertes Alkan darstellen.

**24.** Copolymer nach einem der vorangehenden Ansprüche, worin das Copolymer optisch aktiv ist.

**25.** Verfahren zur Herstellung eines Copolymers nach Anspruch 1, und Oligomeren davon, umfassend die Schritte von:

(a) Herstellen eines Polymers der Formel (II) oder (II');

(II) $H\text{-}POOX[CHRCHR'POOX]_n\text{-}H$,

(II') $H\text{-}[POOX[CHRCHR'\ POOX]_{n'}\text{-}CR^x_2\text{-}NR^y\text{-}(R^z\text{-}R^yN)_{m'}\text{-}CR^x_2]_p\text{-}H$

worin R, R' , X, n, n' , m', $R^x$, $R^y$ und $R^z$ die gleiche Bedeutung wie in jedem der vorstehenden Ansprüche aufweisen; und

(b) anschließend

(i) Zusetzen einer geeigneten Amin-Gruppe; und

(ii) Erhitzen des erhaltenen Reaktionsgemisches für 15 bis 180 Minuten in Gegenwart einer Carbonylverbindung.

**26.** Verfahren nach Anspruch 25, wobei das Reaktionsgemisch unter Rückfluss erhitzt wird.

**27.** Verfahren nach Anspruch 25 oder Anspruch 26, wobei das Reaktionsgemisch sauer eingestellt wird.

**28.** Verfahren nach Anspruch 27, wobei der pH-Wert der Lösung eingestellt wird, um einen pH-Wert von 0,5 bis 4 aufzuweisen.

**29.** Verfahren nach einem der Ansprüche 27 oder 28, wobei der pH-Wert der Lösung eingestellt wird, dass ein pH-Wert von 0,5 bis 3 vorliegt.

**30.** Verfahren nach einem der Ansprüche 27 bis 29, wobei der pH-Wert der Lösung eingestellt wird, dass ein pH-Wert von 1 vorliegt.

**31.** Verfahren nach einem der Ansprüche 27 bis 30, wobei der pH-Wert der Lösung durch die Zugabe einer Säure eingestellt wird.

**32.** Verfahren nach einem der Ansprüche 27 bis 31, wobei der pH-Wert der Lösung durch die Zugabe von Chlorwasserstoffsäure eingestellt wird.

**33.** Verfahren nach einem der Ansprüche 31 oder 32, wobei die Säure zugegeben wird, bevor die Lösung erhitzt wird.

**34.** Verfahren nach einem der Ansprüche 25 bis 33, wobei die Carbonylverbindung während des Erhitzens unter Rückfluss zu der Lösung gegeben wird.

**35.** Verfahren nach einem der Ansprüche 25 bis 34, wobei die Carbonylverbindung tropfenweise zugegeben wird.

**36.** Verfahren nach einem der Ansprüche 25 bis 35, wobei die Carbonylverbindung über einen Zeitraum von 20 bis 40 Minuten zugegeben wird.

**37.** Verfahren nach einem der Ansprüche 25 bis 36, wobei die Carbonylverbindung über einen Zeitraum von 30 Minuten zugegeben wird.

**38.** Verfahren nach einem der Ansprüche 25 bis 37, wobei die Carbonylverbindung ein Aldehyd ist.

**39.** Verfahren nach Anspruch 38, wobei der Aldehyd Formaldehyd ist.

**40.** Verfahren nach einem der Ansprüche 25 bis 39, wobei die Lösung für 15 bis 180 Minuten nach Zugabe der Carbonylverbindung unter Rückfluss erhitzt wird.

**41.** Verfahren nach Anspruch 40, wobei die Lösung für 30 bis 120 Minuten unter Rückfluss erhitzt wird.

**42.** Verwendung eines Copolymers nach einem der Ansprüche 1 bis 24 oder hergestellt durch das Verfahren nach einem der Ansprüche 25 bis 41, als ein Kesselstein- oder Korrosionsinhibitor, bei der Kühlwasserbehandlung, Behandlung von industriellem Prozesswasser, Kraftwerkskesselwasserbehandlung, Behandlung von Wasser in Zentralheizungs- und Klimaanlagensystemen, Entsalzungsanlagen, und zum Behandeln von Wasser, verwendet oder gefördert in Ölbohrlöchern, einschließlich Einspritzwasser, gefördertem Wasser, Wasser, das für hydrostatisches Testen von Pipelines verwendet wird, insbesondere zur Verhinderung der Abscheidung von Calciumcarbonatkesselstein, als ein SMUT-Inhibitor, Additiv für Mundhygienezubereitungen und Zahnpflegemittel, Härtungsverzögerer für Zement oder Gips, Entflockulierungsmittel, bei der Anhaftung, bei der Vorbehandlung, als ein Dispersionsmittel, Maskierungsmittel, Chelatisierungsmittel, Schaumsteuerungsmittel, Builder, Tensid, Versiegelungsmittel beim Anodisieren von Aluminium, Additiv für Waschmittelzusammensetzungen, Additiv für eine Zusammensetzung für Geschirrspülautomaten, Additiv zur Hydrophilierung von Oberflächen, Additiv zur Hydrophilierung von Kunststoffen, Additiv für auf Wasser basierende funktionelle Fluide oder Peroxidstabilisator.

## Revendications

**1.** Copolymère ou oligomère de celui-ci, de formule :

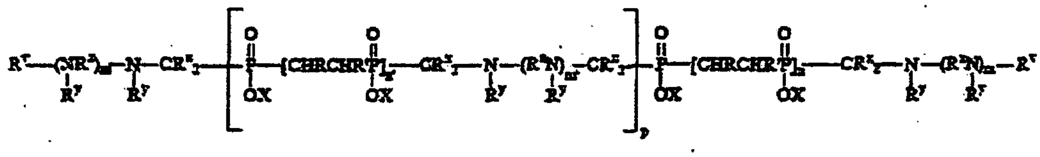

dans laquelle :

- R et R' sont choisis, chacun indépendamment, parmi un atome d'hydrogène, un groupe hydroxyle, un groupe carboxyle, un groupe alkyle, aryle ou alcaryle, ou un groupe alkyle, aryle ou alcaryle, hydroxy - ou carboxy - substitué, à condition que R et R' renferment conjointement un total de moins de 23 atomes de carbone ;
- X est un atome d'hydrogène ou un cation ou un groupe alkyle ;
- n et n', identiques ou différents, sont supérieurs ou égaux à 0;
- chacun des groupes $R^y$, qui peuvent être identiques ou différents, et chacun des groupes $R^x$, qui peuvent être identiques ou différents, sont un atome d'hyrogène, un groupe alkyle, un groupe cycloalkyle, un groupe alcényle, un groupe aryle, un groupe aralkyle, un groupe alcaryle ou un groupe alcoxyalkyle, éventuellement substitué, renfermant de 1 à 20 atomes de carbone, dont chacun peut être éventuellement substitué une fois ou plus d'une fois ;
- $R^z$ est un groupe alcane ou un groupe alcane substitué ou un groupe hétérocyclique ;
- m et m', identiques ou différents, valent zéro ou de 1 à 100 ;
- p vaut zéro ou de 1 à 100 ; et
- chacun des groupes $R^v$ qui peuvent être identiques ou différents, est un atome d'hydrogène, un groupe alkyle, un groupe cycloalkyle, un groupe alcényle, un groupe aryle, un groupe aralkyle, un groupe alcaryle ou un groupe alcoxyalkyle, éventuellement substitué, renfermant de 1 à 20 atomes de carbone, dont chacun peut être éventuellement substitué une fois ou plus d'une fois.

**2.** Copolymère selon la revendication 1, dans lequel :

- p vaut 0, et n est différent de 0, ou
- p est différent de 0, n vaut 0 et n' vaut 0.

**3.** Copolymère selon l'une quelconque des revendications précédentes, dans lequel la séquence centrale est hydrophile et les séquences externes du copolymère sont hydrophiles ou hydrophobes.

**4.** Copolymère selon la revendication 3, dans lequel les séquences externes sont hydrophobes.

**5.** Copolymère selon l'une quelconque des revendications précédentes, dans lequel tous les groupes fonctionnels présents sur $R^y$, $R^x$ ou $R^z$ ne se décomposent pas de façon irréversible en présence d'un composé carbonyle ou de l'acide hypophosphoreux ou d'un acide inorganique.

**6.** Copolymère selon l'une quelconque des revendications précédentes, où le copolymère présente un poids moléculaire compris entre 300 et 500 000.

**7.** Copolymère selon l'une quelconque des revendications précédentes, dans lequel X est un ion de métal alcalin.

**8.** Copolymère selon la revendication 7, dans lequel X est le sodium, le potassium ou le lithium.

**9.** Copolymère selon l'une quelconque des revendications 1 à 6, dans lequel X est un ammonium ou un ammonium substitué et organique (y compris un ammonium quaternaire).

**10.** Copolymère selon la revendication 9, dans lequel X est le triéthyl- ou le triéthanolammonium.

**11.** Copolymère selon l'une quelconque des revendications 1 à 6, dans lequel X est un phosphonium quaternaire.

**12.** Copolymère selon la revendication 11, dans lequel X est le tétrakis-hydroxyméthylphosphonium.

**13.** Copolymère selon l'une quelconque des revendications 1 à 6, dans lequel X est un ion de métal alcalino-terreux.

**14.** Copolymère selon la revendication 13, dans lequel X est le calcium ou le magnésium.

**15.** Copolymère selon l'une quelconque des revendications 1 à 6, dans lequel X est l'aluminium.

**16.** Copolymère selon l'une quelconque des revendications précédentes, dans lequel les groupes $R^y$ représentent un atome d'hydrogène, un groupe alkyle substitué, un groupe aryle ou des hétérocycles.

**17.** Copolymère selon la revendication 16, dans lequel au moins un groupe $R^y$ représente un groupe qui porte un ou plusieurs groupes fonctionnels capables de coordination avec des ions métalliques.

**18.** Copolymère selon la revendication 16, dans lequel au moins un groupe $R^y$ représente un groupe qui porte un ou plusieurs groupes carbonyle, carboxyle, amino, imino, amido, acide phosphonique, hydroxyle, acide sulfonique, arséniate, ester inorganique et organique de ceux-ci.

**19.** Copolymère selon l'une quelconque des revendications précédentes, dans lequel les groupes $R^x$ sont tous des atomes d'hydrogène.

**20.** Copolymère selon l'une quelconque des revendications 1 à 18, dans lequel les groupes $R^x$ sont indépendamment un groupe alkyle, un groupe aryle, un groupe cycloalkyle, un groupe aralkyle ou un groupe alcoxyalkyle.

**21.** Copolymère selon la revendication 20, dans lequel les groupes $R^x$ sont substitués au moins une fois.

**22.** Copolymère selon l'une quelconque des revendications précédentes, dans lequel les groupes $R^z$ sont substitués au moins une fois avec un groupe acide carboxylique, un groupe acide sulfonique, un groupe acide phosphonique ou un groupe amino.

**23.** Copolymère selon l'une quelconque des revendications précédentes, où le copolymère renferme un ou plusieurs groupes $R^z$ étant un alcane ou un alcane substitué.

**24.** Copolymère selon l'une quelconque des revendications précédentes, où le copolymère est optiquement actif.

**25.** Procédé de préparation d'un copolymère selon la revendication 1, et d'oligomères de celui-ci, comprenant les étapes consistant à :

(a) préparer un polymère de formule (II) ou (II') :

(II) $H\text{-}POOX[CHRCHR'POOX]_n\text{-}H$

(II') $H\text{- }[POOX\ [CHRCHR'\ POOX]\ n\text{-}CR^x{}_2\text{-}NR^y\text{-}(\text{-}R^z\text{-}R^yN)_m\text{-}CR^x{}_2]_p\text{-}H$

dans lesquelles R, R', X, n, n', m', $R^x$, $R^y$ et $R^z$ présentent la même signification que dans l'une quelconque des revendications ci-dessus ; et
(b) ensuite

(i) ajouter un groupe amine approprié ; et
(ii) chauffer le mélange réactionnel résultant pendant 15 à 180 minutes en présence d'un composé carbonyle.

**26.** Procédé selon la revendication 25, dans lequel le mélange réactionnel est chauffé au reflux.

**27.** Procédé selon la revendication 25 ou la revendication 26, dans lequel le mélange réactionnel est ajusté de façon à ce qu'il soit acide.

**28.** Procédé selon la revendication 27, dans lequel le pH de la solution est ajusté de façon à ce qu'il soit de 0,5 à 4.

**29.** Procédé selon l'une ou l'autre des revendications 27 ou 28, dans lequel le pH de la solution est ajusté de façon à ce qu'il soit de 0,5 à 3.

**30.** Procédé selon l'une quelconque des revendications 27 à 29, dans lequel le pH de la solution est ajusté de façon à ce qu'il soit de 1.

**31.** Procédé selon l'une quelconque des revendications 27 à 30, dans lequel le pH de la solution est ajusté par l'addition d'un acide.

**32.** Procédé selon l'une quelconque des revendications 27 à 31 dans lequel le pH de la solution est ajusté par l'addition d'acide chlorhydrique.

**33.** Procédé selon l'une ou l'autre des revendications 31 ou 32, dans lequel l'acide est ajouté avant que la solution soit chauffée.

**34.** Procédé selon l'une quelconque des revendications 25 à 33 dans lequel le composé carbonyle est ajouté à la solution durant le chauffage au reflux.

**35.** Procédé selon l'une quelconque des revendications 25 à 34, dans lequel le composé carbonyle est ajouté goutte à goutte.

**36.** Procédé selon l'une quelconque des revendications 25 à 35, dans lequel le composé carbonyle est ajouté sur une période de 20 à 40 minutes.

**37.** Procédé selon l'une quelconque des revendications 25 à 36 dans lequel le composé carbonyle est ajouté sur une période de 30 minutes.

**38.** Procédé selon l'une quelconque des revendications 25 à 37 dans lequel le composé carbonyle est un aldéhyde.

**39.** Procédé selon la revendication 38, dans lequel l'aldéhyde est le formaldéhyde.

**40.** Procédé selon l'une quelconque des revendications 25 à 39, dans lequel la solution est chauffée au reflux pendant

15 à 180 minutes après l'addition du composé carbonyle.

**41.** Procédé selon la revendication 40, dans lequel la solution est chauffée au reflux pendant 30 à 120 minutes.

**42.** Utilisation d'un copolymère selon l'une quelconque des revendications 1 à 24 ou produit par la méthode selon l'une quelconque des revendications 25 à 41 en tant qu'inhibiteur de tartre ou de corrosion, dans un traitement d'eau de refroidissement, un traitement d'eau de traitement industrielle, un traitement d'eau de chaudière, un traitement de l'eau dans des systèmes de chauffage central ou de climatisation, des installations de dessalement et pour le traitement d'eau utilisée ou produite dans des puits de pétrole, y compris de l'eau d'injection, de l'eau produite, de l'eau utilisée pour la mise à l'essai hydrostatique de pipelines, en particulier pour la prévention du dépôt de tartre de carbonate de calcium, en tant qu'inhibiteur de fumerons, additif pour des préparations d'hygiène buccale et du dentifrice, retardateur de prise pour le ciment ou le plâtre, agent anti-floculant, en adhésion, en pré-traitement, en tant qu'agent dispersant, agent séquestrant, agent chélateur, agent de contrôle de mousse, adjuvant, agent tensioactif, agent scellant dans l'anodisation de l'aluminium, additif pour des compositions détergentes, additif pour une composition pour lave-vaisselle automatique, additif pour l'hydrophilisation de surfaces, additif pour l'hydrophilisation de matières plastiques, additif pour des fluides fonctionnels à base aqueuse ou agent stabilisant de peroxyde.

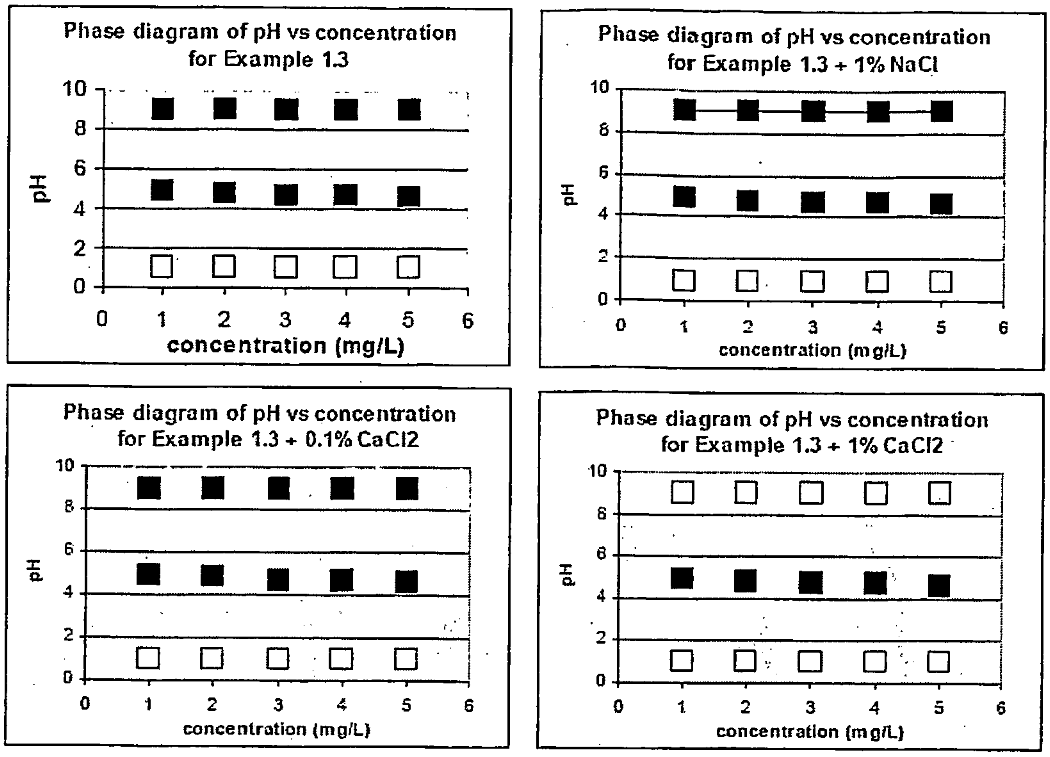


Figure 1

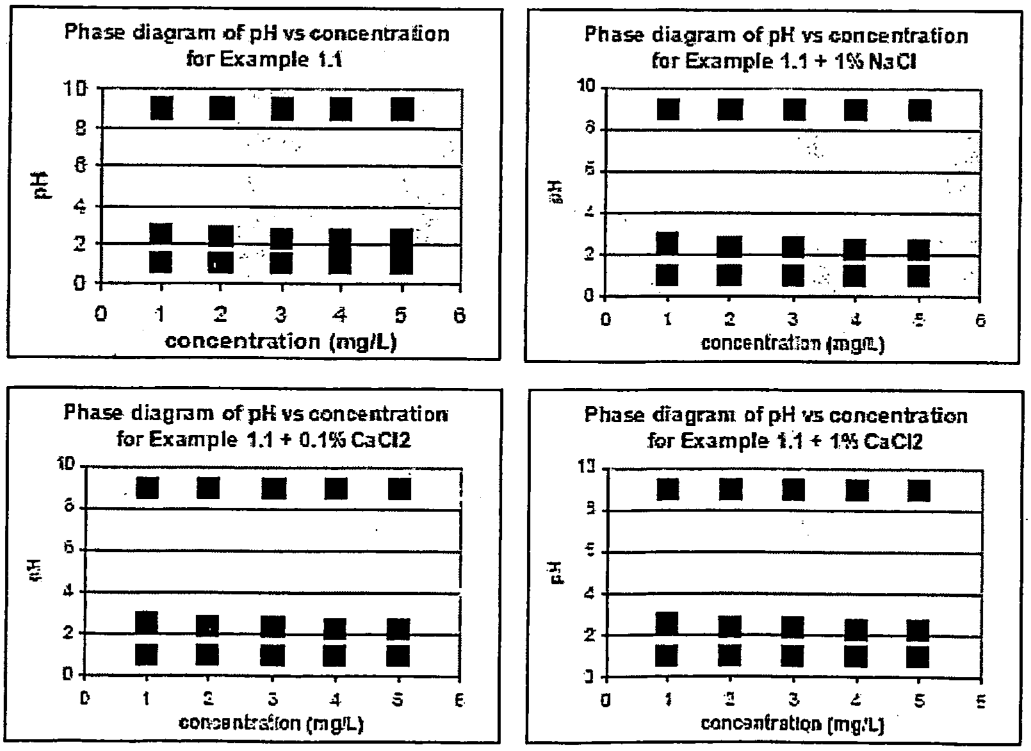


Figure 2

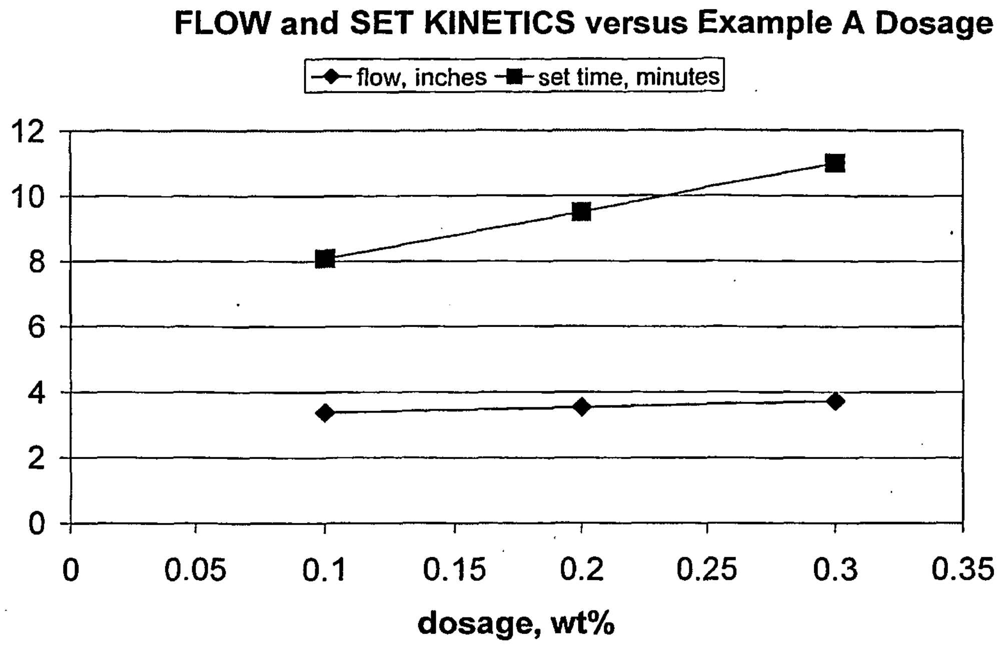
FLOW and SET KINETICS versus Example A Dosage
flow, inches
set time, minutes
12
10
8
6
4
2
0
0
0.05
0.1
0.15
0.2
0.25
0.3
0.35
dosage, wt%

Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1254144 A
- WO 2006032896 A
- GB 1082179 A
- US 4565647 A
- EP 488868 A
- EP 561656 A
- US 4728455 A
- US 5114606 A
- US 5280117 A
- EP 909809 A
- US 5559261 A
- WO 9623859 A
- WO 9623860 A
- WO 9623861 A